# EUROPEAN PATENT APPLICATION

(11) **EP 4 431 921 A1**
(43) Date of publication of application: **18.09.2024**
(21) Application number: 24161295.1
(22) Date of filing: 04.03.2024
(51) Int. Cl.: G01N 21/88, G06T 11/20, G06Q 10/20

(54) **INFORMATION PROCESSING APPARATUS, INFORMATION PROCESSING METHOD, CARRIER MEANS, AND INFORMATION PROCESSING SYSTEM**

(30) Priority: 17.03.2023 JP 2023042718
(71) Applicant: Ricoh Company, Ltd., Tokyo 143-8555 (JP)
(72) Inventor: Oshikiri, Kohji, Tokyo, 143-8555 (JP); Kikuchi, Taro, Tokyo, 143-8555 (JP); Arake, Yuuki, Tokyo, 143-8555 (JP)
(74) Representative: Marks & Clerk LLP

(57) **Abstract**

An information processing apparatus includes estimation means (36, 56) for estimating a second defect location in a structure at a second time, based on a second captured image of the structure at the second time later than a first time. The information processing apparatus includes generation means (37, 57) for generating a display image including a first drawn defect image and an estimated defect image, the first drawn defect image being a drawn image indicating a first defect location in the structure at the first time, the estimated defect image indicating the second defect location estimated by the estimation means (36, 56).

## Description

### BACKGROUND

### Technical Field

Embodiments of the present disclosure relate to an information processing apparatus, an information processing method, carrier means, and an information processing system.

### Related Art

Structures such as tunnels are lined with concrete, and such a concrete structure changes with time and has defects such as cracks. If the structure with defects is left as-is, concrete fragments may peel off on the surface of the structure and cause damage to vehicles or people passing through or by the structure. Accordingly, an inspector performs periodic inspections and reports inspection results to the state or local government. The inspector files reports of the inspections by submitting documents specified by the state or municipal government.

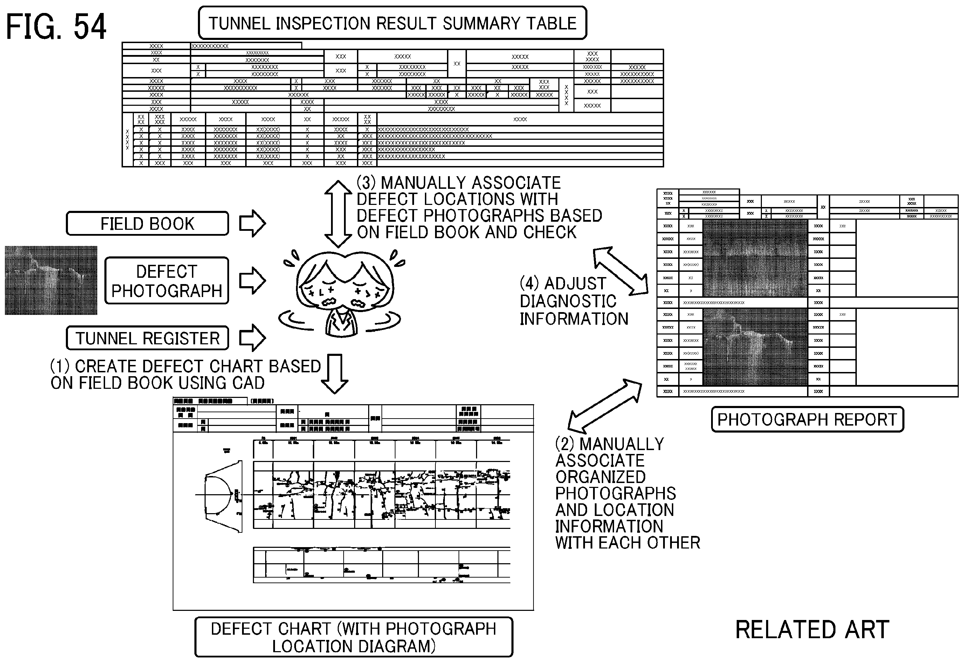

A process performed by the inspector will be described with reference to FIG. 54. FIG. 54 conceptually illustrates an existing process performed by the inspector.

The inspector creates a submission document based on a field book containing notes such as comments recorded during the inspection of a tunnel, defect photographs that are captured images of defect portions in the tunnel, and a tunnel register obtained from the state government or any other organization. The tunnel register indicates the length and other information of the tunnel. The submission document includes a defect chart, a photograph location diagram, a photograph report, and a tunnel inspection result summary table. In the illustrated example, the defect chart includes the photograph location diagram.

The defect chart is a visual representation of a crack or the like in a defect portion of the structure. The inspector creates a defect chart by, for example, drawing a crack line or the like and entering the width of the crack line by using computer-aided design (CAD) or the like on a personal computer (PC) while checking the field book, the defect photographs, and the tunnel register (see Japanese Unexamined Patent Application Publication No. 2002-288180).

The photograph report is a record to which defect photographs are attached and in which determination results and the like are described. The inspector attaches defect photographs to the photograph report and enters diagnostic information including determination results in the photograph report with reference to the comments in the field book. The inspector also enters, in the defect chart, numbers to be associated with the defect photographs attached to the photograph report to clarify which portion of the tunnel each of the defect photographs attached to the photograph report represents.

The tunnel inspection result summary table is a table including information such as the length of the tunnel and the determination results.

The inspector enters the length of the tunnel and the like in the tunnel inspection result summary table, based on the tunnel register, and enters diagnostic information including the determination results of the defects, based on the field book. The inspector further enters, in the tunnel inspection result summary table, numbers to be associated with the defect photographs attached to the photograph report to associate each of the defect portions corresponding to the determination results with a corresponding one of the defect photographs attached to the photograph report.

### SUMMARY

An object of the present disclosure is to facilitate estimation of a defect point generated in a structure during a period of time between a first time and a second time.

In one aspect of the present disclosure, an information processing apparatus includes estimation means and generation means. The estimation means estimates, estimating a second defect location in a structure at a second time, based on a second captured image of the structure at the second time later than a first time. The generation means generates a display image including a first drawn defect image and an estimated defect image, the first drawn defect image being a drawn image indicating a first defect location in the structure at the first time, the estimated defect image indicating the second defect location estimated by the estimation means.

In another aspect of the present disclosure, an information processing method performed by an information processing apparatus includes estimating a second defect location in a structure at a second time, based on a second captured image of the structure at the second time later than a first time; and generating a display image including a first drawn defect image and an estimated defect image, the first drawn defect image being a drawn image indicating a first defect location in the structure at the first time, the estimated defect image indicating the estimated second defect location.

In another aspect of the present disclosure, carrier means carries computer readable codes which, when executed by a computer, cause the computer to execute the information processing method described above.

In another aspect of the present disclosure, an information processing system includes the information processing apparatus described above, and a communication terminal to communicate with the information processing apparatus. The information processing apparatus includes transmitting means. The transmitting means transmits the display image to the communication terminal. The communication terminal includes receiving means and display control means. The receiving means receives the display image from the information processing apparatus. The display control means controls a display unit to display the display image.

It is possible to facilitate estimation of a defect point generated in a structure during a period of time between a first time and a second time.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a diagram illustrating a general arrangement of a diagnostic system, according to an embodiment of the present disclosure;
FIG. 2 is a diagram illustrating an example hardware configuration of a drawing apparatus and a diagnosis management server, according to an embodiment of the present disclosure;
FIG. 3 is a functional block diagram of the diagnostic system according to an embodiment of the present disclosure;
FIG. 4 is an illustration of an example of a diagnostic information management table, according to an embodiment of the present disclosure;
FIG. 5 is an illustration of an example of a diagnostic-target element management table, according to an embodiment of the present disclosure;
FIG. 6 is a sequence diagram illustrating a process for creating submission document data, according to an embodiment of the present disclosure;
FIG. 7 is an illustration of a process for creating a submission document, according to an embodiment of the present disclosure;
FIG. 8 is a flowchart illustrating an overview of a process for drawing and inputting diagnostic information, according to an embodiment of the present disclosure;
FIG. 9 is a flowchart illustrating a process in a diagnostic-target image (area) input mode, according to an embodiment of the present disclosure;
FIG. 10 is a flowchart illustrating a process in a diagnostic-target image (straight line) input mode, according to an embodiment of the present disclosure;
FIG. 11 is a flowchart illustrating a process in a diagnostic area input mode, according to an embodiment of the present disclosure;
FIG. 12 is an illustration of an example of a home screen, according to an embodiment of the present disclosure;
FIG. 13 is an illustration of an example screen indicating selection of the diagnostic-target image (area) input mode on a diagnosis-location input screen, according to an embodiment of the present disclosure;
FIG. 14 is an illustration of an example screen for inputting a diagnostic-target image on the diagnosis-location input screen, according to an embodiment of the present disclosure;
FIG. 15 is an illustration of an example screen for inputting a diagnostic-target image on the diagnosis-location input screen, according to an embodiment of the present disclosure;
FIG. 16 is an illustration of an example screen for inputting a diagnostic-target image on the diagnosis-location input screen, according to an embodiment of the present disclosure;
FIG. 17 is an illustration of an example screen for inputting a diagnostic-target image on the diagnosis-location input screen, according to an embodiment of the present disclosure;
FIG. 18 is an illustration of an example screen for inputting a diagnostic-target image on the diagnosis-location input screen, according to an embodiment of the present disclosure;
FIG. 19 is an illustration of an example screen for inputting a diagnostic-target image on the diagnosis-location input screen, according to an embodiment of the present disclosure;
FIG. 20 is an illustration of another example of the diagnosis-location input screen, according to an embodiment of the present disclosure, according to an embodiment of the present disclosure;
FIG. 21 is an illustration of an example screen indicating selection of the diagnostic-target image (straight line) input mode on the diagnosis-location input screen, according to an embodiment of the present disclosure;
FIG. 22 is an illustration of an example screen for inputting a diagnostic-target image on the diagnosis-location input screen, according to an embodiment of the present disclosure;
FIG. 23 is an illustration of an example screen for inputting a diagnostic-target image on the diagnosis-location input screen, according to an embodiment of the present disclosure;
FIG. 24 is an illustration of an example screen for inputting a diagnostic-target image on the diagnosis-location input screen, according to an embodiment of the present disclosure;
FIG. 25 is an illustration of an example screen for inputting a diagnostic-target image on the diagnosis-location input screen, according to an embodiment of the present disclosure;
FIG. 26 is an illustration of an example screen for inputting a diagnostic-target image on the diagnosis-location input screen, according to an embodiment of the present disclosure;
FIG. 27 is an illustration of an example screen indicating selection of the diagnostic area input mode on the diagnosis-location input screen, according to an embodiment of the present disclosure;
FIG. 28 is an illustration of an example screen for inputting a diagnostic area on the diagnosis-location input screen, according to an embodiment of the present disclosure;
FIG. 29 is an illustration of an example screen for inputting a diagnostic area on the diagnosis-location input screen, according to an embodiment of the present disclosure;
FIG. 30 is an illustration of an example screen for inputting a diagnostic area on the diagnosis-location input screen, according to an embodiment of the present disclosure;
FIG. 31 is an illustration of an example screen for inputting a diagnostic area on the diagnosis-location input screen, according to an embodiment of the present disclosure;
FIG. 32A is an illustration of an example relationship between a tunnel and line-of-sight directions, according to an embodiment of the present disclosure;
FIG. 32B is an illustration of an example of a look-up view, according to an embodiment of the present disclosure;
FIG. 32C is an illustration of an example of a look-down view, according to an embodiment of the present disclosure;
FIGs. 33A and 33B are illustrations of the diagnosis-location input screen on which the line-of-sight directions are switched, according to an embodiment of the present disclosure, in which FIG. 33A illustrates an example of a look-up view and FIG. 33B illustrates an example of a look-down view, according to an embodiment of the present disclosure;
FIG. 34 is a flowchart illustrating a method for attaching an attachment image to a photograph report, according to an embodiment of the present disclosure;
FIG. 35 is an illustration of an example relationship between a diagnostic-target image, a diagnostic area, and an attachment image, according to an embodiment of the present disclosure;
FIG. 36 is an illustration of an example home screen on which a past-image selection screen is displayed, according to an embodiment of the present disclosure;
FIG. 37 is an illustration of an example home screen on which a pull-down menu for selecting a past image is displayed, according to an embodiment of the present disclosure;
FIG. 38 is an illustration of an example screen in which a transparency setting area is displayed on the diagnosis-location input screen in a comparison mode, according to an embodiment of the present disclosure;
FIG. 39 is an illustration of an example of a diagnostic target and a diagnostic-target image presented hierarchically, according to an embodiment of the present disclosure, in which (a) of FIG. 39 illustrates an example of a diagnostic target in a past developed-view image, (b) of FIG. 39 illustrates an example of a past diagnostic-target image, (c) of FIG. 39 illustrates an example of a diagnostic target in the latest developed-view image, and (d) of FIG. 39 illustrates an example of the latest diagnostic-target image;
FIGs. 40A, 40B, 40C, 40D, and 40E are illustrations of an example relationship among the position of a transparency point, a developed-view image, a diagnostic-target image, and a display transparency, according to an embodiment of the present disclosure;
FIG. 41 is a flowchart illustrating a process for changing the transparency on the diagnosis-location input screen, according to an embodiment of the present disclosure;
FIG. 42 is an illustration of an example screen for inputting a diagnostic-target image on a diagnosis-location input screen in a comparison mode, according to an embodiment of the present disclosure;
FIG. 43 is an illustration of an example screen for inputting a diagnostic-target image on a diagnosis-location input screen in a comparison mode, according to an embodiment of the present disclosure;
FIG. 44 is an illustration of an example screen for inputting a diagnostic-target image on a diagnosis-location input screen in a comparison mode, according to an embodiment of the present disclosure;
FIG. 45 is an illustration of an example of an updated diagnostic-target element management table, according to an embodiment of the present disclosure;
FIG. 46 is a flowchart illustrating an overview of a process for drawing and inputting diagnostic information according to a modification of the embodiment of the present disclosure, according to an embodiment of the present disclosure;
FIGs. 47A, 47B, 47C, and 47D are illustrations of example images displayed in a superimposed manner according to the modification illustrated in FIG. 46;
FIGs. 48A, 48B, 48C, 48D, and 48E are illustrations of example images in a state in which an estimated defect image illustrated in FIG. 47D has been selected;
FIGs. 49A, 49B, 49C, and 49D are illustrations of example images in a state in which a latest diagnostic-target element image is drawn in FIGs. 48A to 48D;
FIG. 50 is an illustration of an example screen before a diagnostic-target image is input on the diagnosis-location input screen in the comparison mode corresponding to FIGs. 48A to 48E;
FIG. 51 is an illustration of an example screen for inputting a diagnostic-target image on the diagnosis-location input screen in the comparison mode corresponding to FIGs. 49A to 49D;
FIG. 52 is a flowchart illustrating an input and output process according to the modification illustrated in FIG. 46;
FIGs. 53A, 53B, and 53C are illustrations of example inspection processes, according to an embodiment of the present disclosure; and
FIG. 54 is an illustration of a process for creating a submission document in the related art.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

A diagnostic system 1 according to an embodiment of the present disclosure will be described in detail hereinafter with reference to the drawings.

### Overview of System Configuration

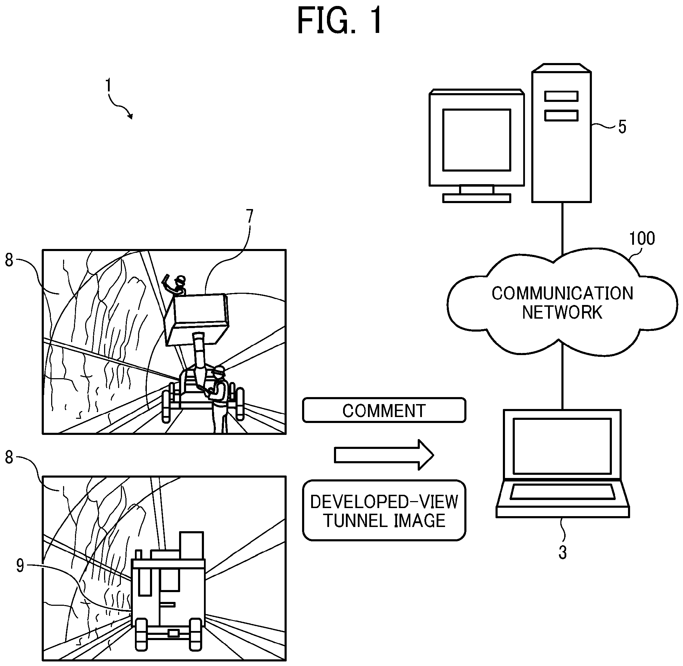

First, a description will be given of an overview of the configuration of the diagnostic system 1. FIG. 1 is a schematic diagram of the diagnostic system 1 according to the present embodiment.

As illustrated in FIG. 1, the diagnostic system 1 according to the present embodiment includes a drawing apparatus 3 and a diagnosis management server 5. The drawing apparatus 3 is an example of an information processing apparatus and a communication terminal. The diagnosis management server 5 is another example of the information processing apparatus.

In one embodiment, the drawing apparatus 3 and the diagnosis management server 5 in the diagnostic system 1 communicate with each other via a communication network 100. The communication network 100 includes the Internet, a mobile communication network, and a local area network (LAN), for example. The communication network 100 may include a wired communication network and a wireless communication network. The wireless communication network may be based on a wireless communication standard such as third-generation (3G), Worldwide Interoperability for Microwave Access (WiMAX), or Long Term Evolution (LTE). In one embodiment, the drawing apparatus 3 performs communication using short-range communication technology such as near field communication (NFC^{®}).

The drawing apparatus 3 is a computer for inputting various types of data such as a diagnostic-target image, a diagnostic area, and diagnostic information, which will be described below. A user of the drawing apparatus 3 inputs a developed-view tunnel image and comments to the drawing apparatus 3. The developed-view tunnel image is a captured image of the inside of a tunnel 8, which is an example of a structure, from an entrance to an exit of the tunnel 8. The comments are recorded by an inspector. The user may input data to another apparatus, and then the other apparatus may transfer the data to the drawing apparatus 3. The entire wall surface of the tunnel 8 is actually a cylindrical inner wall surface. A planar image of the inner wall surface of the tunnel 8 is referred to as a "developed-view image". The structure is not limited to a tunnel and may be a road, a slope, or the like.

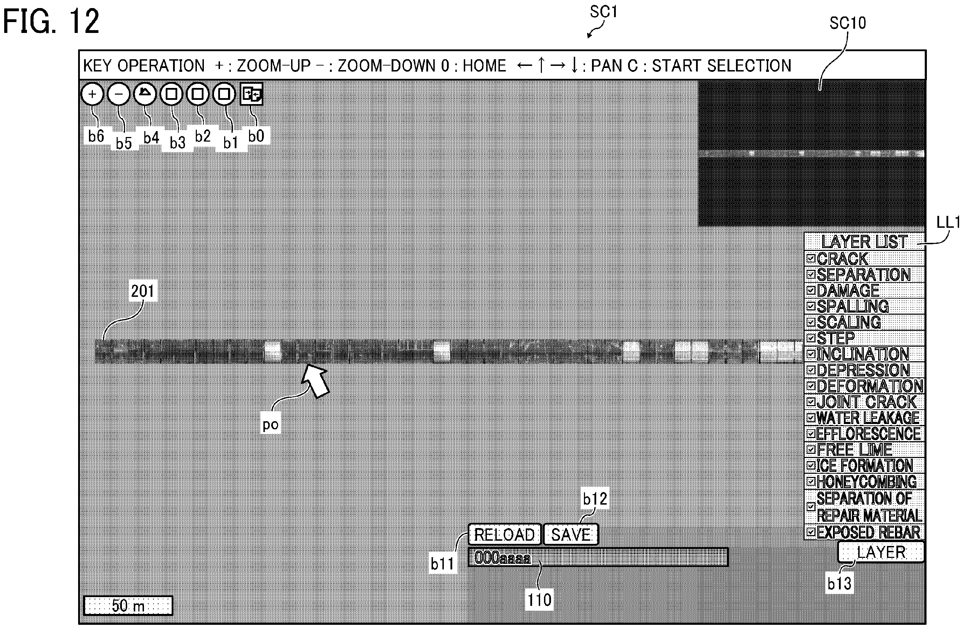

The inspector performs an inspection while riding on an inspection vehicle 7. The inspector draws a line over a defect portion including a crack or the like with special chalk to make the defect portion conspicuous, or records the width of the crack in centimeters. At this time, the inspector records a comment in a field book or the like to indicate the state of the defect or a determination result. An assistant outside the inspection vehicle 7 records a comment made by the inspector in the field book or the like. In some cases, the assistant takes photographs of the entire defect. After that, an image capturing vehicle 9 with a camera mounted on board captures images of the wall of the tunnel 8 while traveling through the tunnel 8 from the entrance to the exit of the tunnel 8 to acquire multiple captured images. The multiple captured images are joined together to obtain data of a developed-view tunnel image illustrated in FIG. 12 described below. Since the developed-view tunnel image includes a portion written with the special chalk by the inspector, the user of the drawing apparatus 3 views the developed-view tunnel image at a later date to easily grasp the position and shape of the defect portion.

### Hardware Configuration

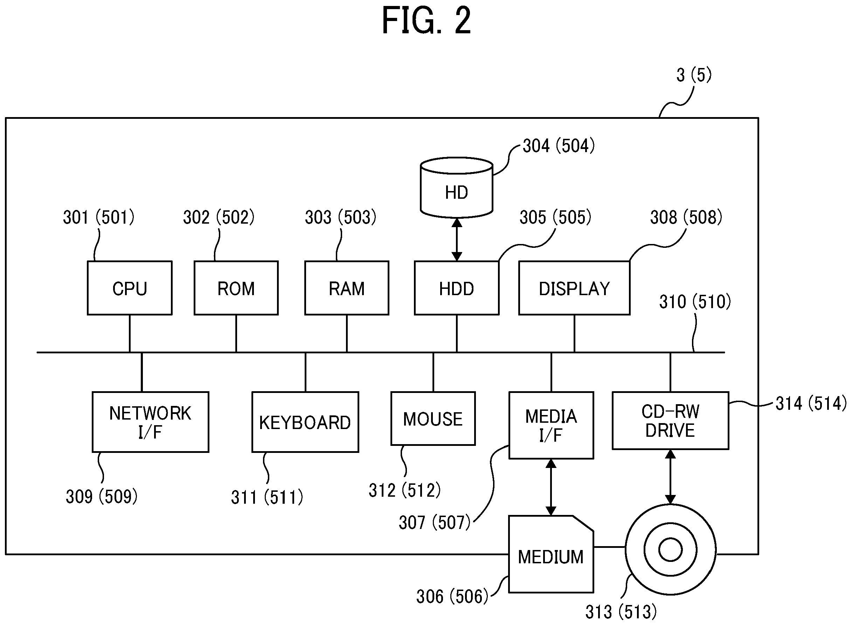

Next, the hardware configuration of the drawing apparatus 3 and the diagnosis management server 5 in the diagnostic system 1 will be described with reference to FIG. 2. Hardware Configuration of Drawing Apparatus

FIG. 2 illustrates the hardware configuration of the drawing apparatus 3 and the diagnosis management server 5. Numbers in parentheses indicate the components of the diagnosis management server 5.

As illustrated in FIG. 2, the drawing apparatus 3 includes a central processing unit (CPU) 301, a read only memory (ROM) 302, a random access memory (RAM) 303, a hard disk (HD) 304, a hard disk drive (HDD) 305, a recording medium 306, a media interface (I/F) 307, a display 308, a network I/F 309, a keyboard 311, a mouse 312, a compact disc-rewritable (CD-RW) drive 314, and a bus line 310.

The CPU 301 controls the overall operation of the drawing apparatus 3. The ROM 302 stores a program used to drive the CPU 301. The RAM 303 is used as a work area for the CPU 301. The HD 304 stores various types of data such as programs. The HDD 305 controls reading or writing of various types of data from or to the HD 304 under control of the CPU 301. The media I/F 307 controls reading or writing (storage) of data from or to the recording medium 306 such as a flash memory. The display 308 displays various types of information such as a cursor, a menu, a window, text, or an image. The display 308 is an example of display unit. The network I/F 309 is an interface for performing data communication using the communication network 100. The keyboard 311 is an example of an input means including a plurality of keys for inputting characters, numerical values, various instructions, and so on. The mouse 312 is an example of an input means that allows the user to select or execute various instructions, select a target for processing, or move a cursor being displayed. The CD-RW drive 314 controls reading or writing of various types of data from or to a CD-RW 313, which is an example of a removable recording medium.

The diagnosis management server 5 includes a CPU 501, a ROM 502, a RAM 503, an HD 504, an HDD 505, a recording medium 506, a media I/F 507, a display 508, a network I/F 509, a keyboard 511, a mouse 512, a CD-RW drive 514, and a bus line 510. Since the components of the diagnosis management server 5 described above are the same or substantially the same as the components of the drawing apparatus 3 described above (i.e., the CPU 301, the ROM 302, the RAM 303, the HD 304, the HDD 305, the recording medium 306, the media I/F 307, the display 308, the network I/F 309, the keyboard 311, the mouse 312, the CD-RW drive 314, and the bus line 310), a description thereof will be omitted.

In place of the CD-RW drive 314 (514), any other drive such as a compact disc-recordable (CD-R) drive may be used. Each of the drawing apparatus 3 and the diagnosis management server 5 may be implemented by a single computer or a plurality of computers to which the individual separate components (functions, means, or storage units) are allocated as desired.

### Functional Configuration of Diagnostic System

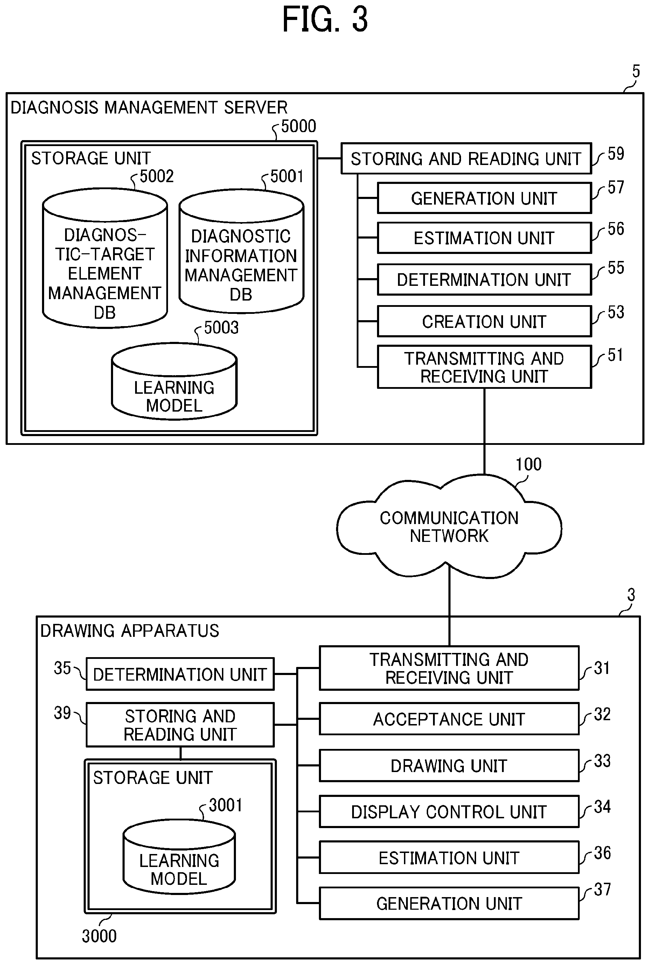

Next, functional configurations in the present embodiment will be described with reference to FIGs. 3 to 5. FIG. 3 is a functional block diagram of the diagnostic system 1.

### Functional Configuration of Drawing Apparatus

As illustrated in FIG. 3, the drawing apparatus 3 includes a transmitting and receiving unit 31, an acceptance unit 32, a drawing unit 33, a display control unit 34, a determination unit 35, an estimation unit 36, a generation unit 37, and a storing and reading unit 39. Each of these units is a function or means implemented by or caused to function by any one of the hardware elements illustrated in FIG. 2 operating in accordance with instructions from the CPU 301 according to a program loaded onto the RAM 303 from the HD 304. The drawing apparatus 3 further includes a storage unit 3000, which is implemented by the RAM 303 and the HD 304 illustrated in FIG. 2. The storage unit 3000 is an example of storage means.

### Functional Components of Drawing Apparatus

Next, the components of the drawing apparatus 3 will be described.

The transmitting and receiving unit 31 is implemented by instructions from the CPU 301 and by the network I/F 309 illustrated in FIG. 2, and transmits and receives various types of data (or information) to and from other terminals, apparatuses, or systems via the communication network 100.

The acceptance unit 32 is mainly implemented by instructions from the CPU 301 and by the keyboard 311 and the mouse 312 illustrated in FIG. 2, and accepts various inputs from the user. The acceptance unit 32 is an example of acceptance means.

The drawing unit 33 is implemented by instructions from the CPU 301 illustrated in FIG. 2, and draws a line, a rectangle, or the like to an image displayed on the display 308.

The display control unit 34 is implemented by instructions from the CPU 301 illustrated in FIG. 2, and causes the display 308 to display various images or screens. The display control unit 34 is an example of display control means.

The determination unit 35 is implemented by instructions from the CPU 301 illustrated in FIG. 2, and performs various determinations described below.

The estimation unit 36 is implemented by instructions from the CPU 301 illustrated in FIG. 2, and performs various estimation processes described below.

The generation unit 37 is a function of generating various types of image data to be displayed on the display 308. The generation unit 37 is mainly implemented by, for example, a program executed by the CPU 301 illustrated in FIG. 2.

The storing and reading unit 39 is implemented by instructions from the CPU 301 and by the HDD 305, the media I/F 307, and the CD-RW drive 314 illustrated in FIG. 2. The storing and reading unit 39 performs a process of storing various types of data in the storage unit 3000, the recording medium 306, and the CD-RW 313 and reading various types of data from the storage unit 3000, the recording medium 306, and the CD-RW 313.

The storage unit 3000 stores a learning model 3001. The learning model 3001 stores a plurality of pairs of images, each pair including a captured image of a tunnel, which is an example of a structure, and a drawn defect image that is a drawn image indicating a defect location in the tunnel.

### Functional Configuration of Diagnosis Management Server

The diagnosis management server 5 includes a transmitting and receiving unit 51, a creation unit 53, a determination unit 55, an estimation unit 56, a generation unit 57, and a storing and reading unit 59. Each of these units is a function or means implemented by or caused to function by any one of the hardware elements illustrated in FIG. 2 operating in accordance with instructions from the CPU 501 according to a program loaded onto the RAM 503 from the HD 504. The diagnosis management server 5 further includes a storage unit 5000, which is implemented by the HD 504 illustrated in FIG. 2.

The storage unit 5000 stores a diagnostic information management database (DB) 5001, a diagnostic-target element management DB 5002, and a learning model 5003. The learning model 5003 stores a plurality of pairs of images, each pair including a captured image of a tunnel, which is an example of a structure, and a drawn defect image that is a drawn image indicating a defect location in the tunnel.

### Diagnostic Information Management Table

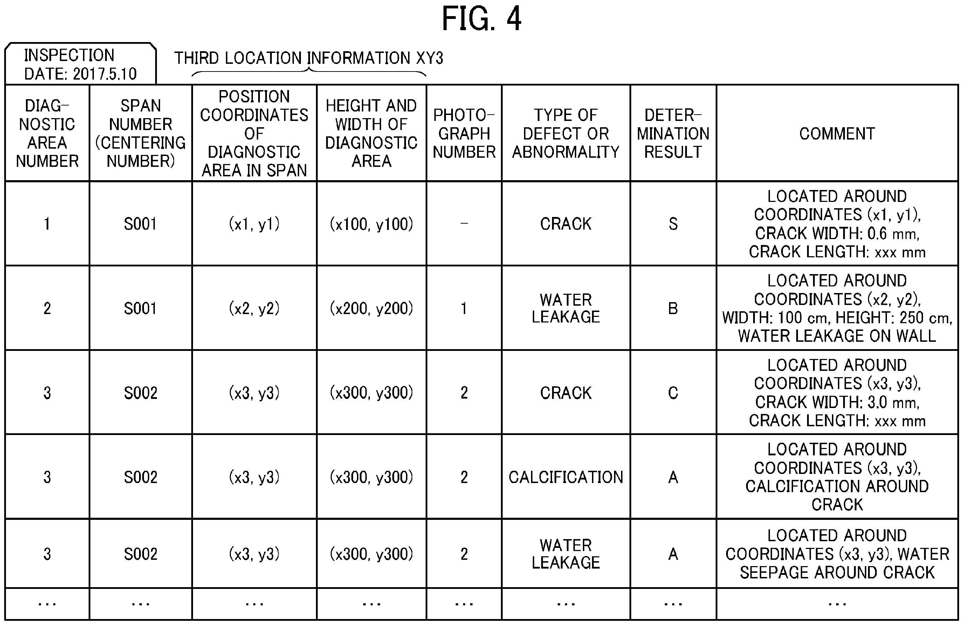

FIG. 4 is an illustration of a diagnostic information management table. In the storage unit 5000, the diagnostic information management DB 5001 includes the diagnostic information management table as illustrated in FIG. 4. The diagnostic information management table manages, for each inspection date information, a diagnostic area number, a span number (centering number), position coordinates of a diagnostic area in a span, a height and a width of the diagnostic area, a photograph number, a type of defect or abnormality, a determination result, and a comment in association with each other.

The inspection date information indicates an inspection date, and the inspection date is a date on which, as illustrated in FIG. 1, the tunnel 8 is inspected using the inspection vehicle 7 and the image capturing vehicle 9. The diagnostic area number is identification information indicating a group including a diagnostic area described below. The span number indicates the number of a span of the tunnel 8. Spans refer to sections into which a tunnel is divided from the entrance and each of which runs a length of 10 m. FIG. 12 illustrates a developed-view tunnel image 201 including images of a plurality of spans. The span number is described in a tunnel register distributed by the state government or any other organization.

The position coordinates of a diagnostic area in a span indicate the position coordinates of a specific point (start point) of a diagnostic area in a certain span in a case where a specific position in the certain span is set as the origin.

The height and width of the diagnostic area indicates the height and width of the diagnostic area from the origin, with the position coordinates of the diagnostic area in the span being set as the origin, to indicate values for specifying the entire diagnostic area.

The photograph number is identification information for identifying a photograph attached to a photograph report.

The type of defect or abnormality indicates a type of defect or abnormality that is a diagnostic target determined by the inspector.

The determination result indicates a determination result of the diagnostic target determined by the inspector. Typically, the levels of the state of the diagnostic target in descending order of severity are: S; A; B; and C, with S being the worst.

The comment is a comment recorded by the inspector or the assistant in FIG. 1.

The position coordinates of the diagnostic area in the span and the height and width of the diagnostic area are examples of third location information XY3.

### Diagnostic-Target Element Management Table

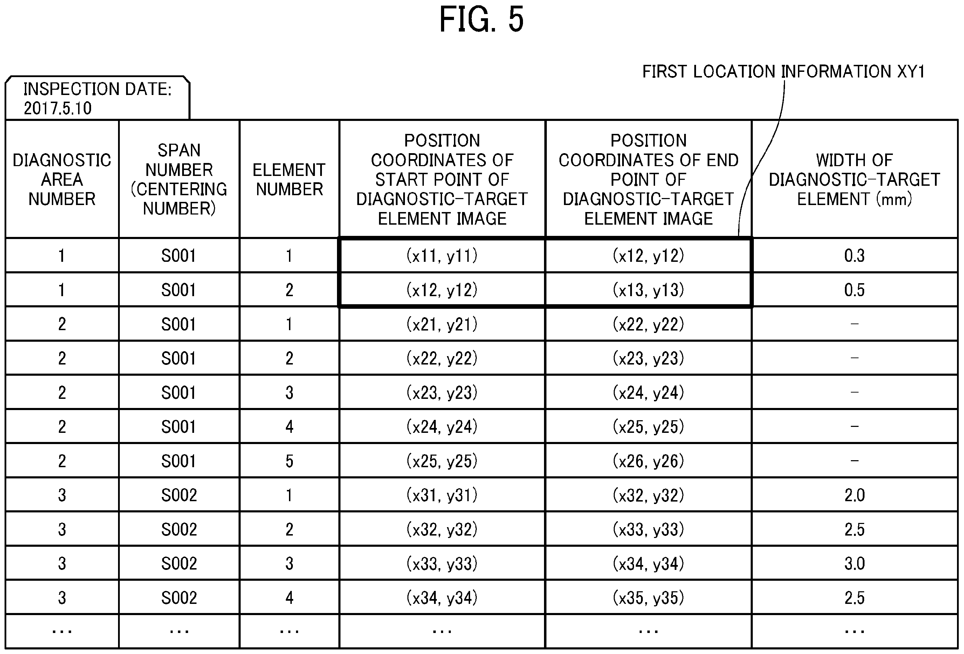

FIG. 5 is an illustration of a diagnostic-target element management table. In the storage unit 5000, the diagnostic-target element management DB 5002 includes the diagnostic-target element management table as illustrated in FIG. 5. The diagnostic-target element management table manages, for each inspection date information, a diagnostic area number, a span number (centering number), an element number, position coordinates of a start point of a diagnostic-target element image, position coordinates of an end point of the diagnostic-target element image, and a width (in mm) of the diagnostic-target element in association with each other.

The inspection date information indicates an inspection date and is the same as the inspection date information illustrated in FIG. 4. The diagnostic area number and the span number (centering number) are the same as those in the diagnostic information management table. The diagnostic area number and the span number (centering number) are used to associate the diagnostic information management table with the diagnostic-target element management table.

The element number is identification information for identifying a diagnostic-target element image that is an element of a diagnostic-target image.

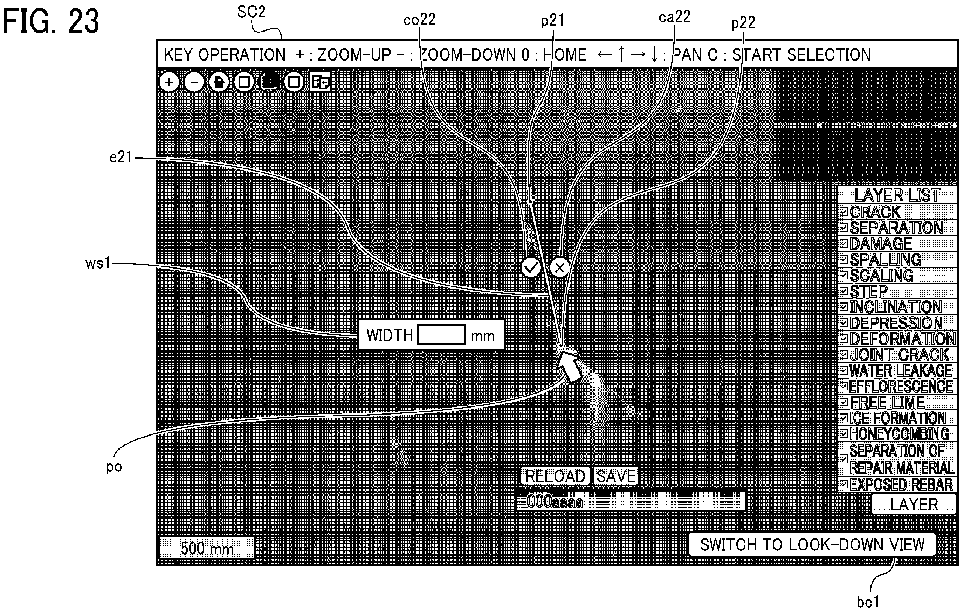

The position coordinates of the start point of the diagnostic-target element image indicate the position coordinates of a start point from which the diagnostic-target element image is drawn in any span of a developed-view tunnel image. For example, FIG. 23 illustrates the position coordinates of a start point p21 of a diagnostic-target element image e21.

The position coordinates of the end point of the diagnostic-target element image indicate the position coordinates of an end point up to which the diagnostic-target element image is drawn in any span of a developed-view tunnel image. For example, FIG. 23 illustrates the position coordinates of an end point p22 of the diagnostic-target element image e21.

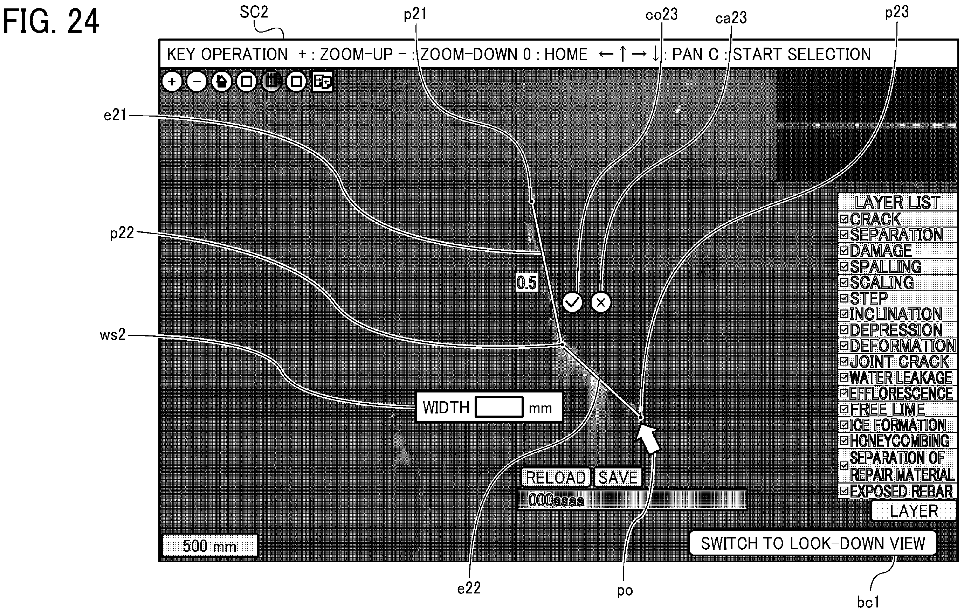

The width (in mm) of the diagnostic-target element indicates the width of a crack, which is a diagnostic-target element. For example, FIG. 23 illustrates a value entered in a width input screen ws1 by the user. In response to the user entering a numerical value in the width input screen ws1, the acceptance unit 32 accepts input of the entered numerical value. As illustrated in FIG. 24, the display control unit 34 displays the entered numerical value ("0.5"). The numerical value of the width entered in the width input screen ws1 is an example of additional information for the diagnostic-target element image. The additional information is not limited to the numerical value of the width and may be a legend or the like included in diagnostic information in a written statement.

The position coordinates of the start points and the end points of diagnostic-target element images with the element numbers "1" and "2" in the diagnostic area number "1" are examples of first location information XY1.

### Functional Components of Diagnosis Management Server

Next, the functional components of the diagnosis management server 5 will be described in detail.

In the following description of the functional components of the diagnosis management server 5, the relationship between each of the functional components of the diagnosis management server 5 and one or more main hardware elements for implementing the functional component among the hardware elements illustrated in FIG. 2 will also be described.

The transmitting and receiving unit 51 of the diagnosis management server 5 illustrated in FIG. 3 is implemented by instructions from the CPU 501 illustrated in FIG. 2 and by the network I/F 509 illustrated in FIG. 2, and transmits and receives various types of data (or information) to and from other apparatuses (terminals) such as the drawing apparatus 3 via the communication network 100. The transmitting and receiving unit 51 is an example of transmitting means.

The creation unit 53 is implemented by instructions from the CPU 501 illustrated in FIG. 2. The creation unit 53 creates data of a submission document to be submitted to the state government or any other organization, based on various types of data managed in the diagnostic information management DB 5001 and the diagnostic-target element management DB 5002. The submission document includes a defect chart, a photograph report, and a tunnel inspection result summary table.

The determination unit 55 is implemented by instructions from the CPU 501 illustrated in FIG. 2, and performs determinations for the creation unit 53 to create the data of the submission document.

The estimation unit 56 is implemented by instructions from the CPU 501 illustrated in FIG. 2, and performs various estimation processes described below.

The generation unit 57 is a function of generating various types of image data to be displayed on the display 508 or 308. The generation unit 57 is mainly implemented by, for example, a program executed by the CPU 501 illustrated in FIG. 2.

The storing and reading unit 59 is implemented by instructions from the CPU 501 illustrated in FIG. 2 and by the HDD 505 illustrated in FIG. 2. The storing and reading unit 59 performs a process of storing various types of data in the storage unit 5000 and reading various types of data from the storage unit 5000.

### Processing or Operation according to Embodiment

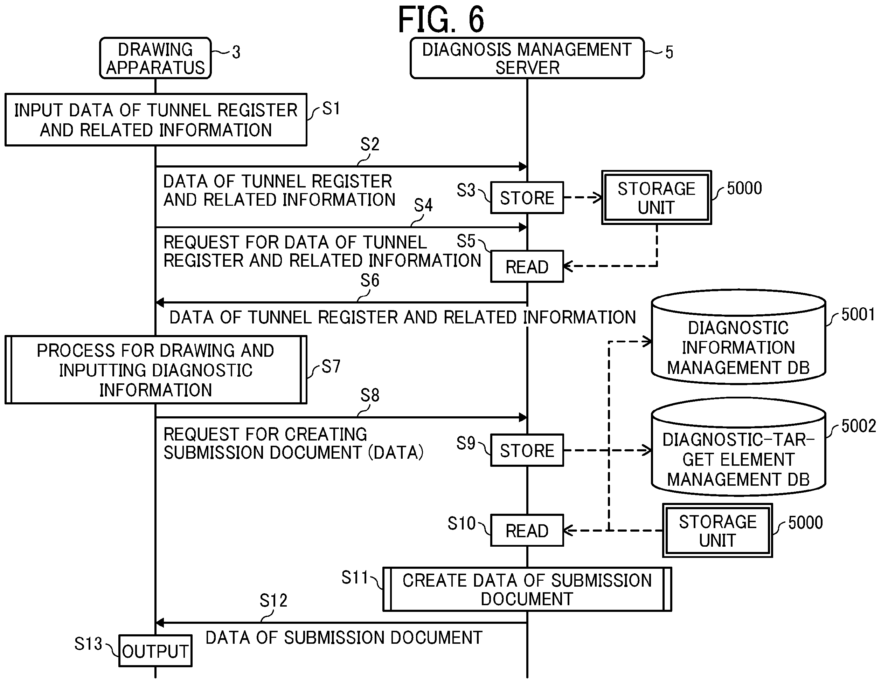

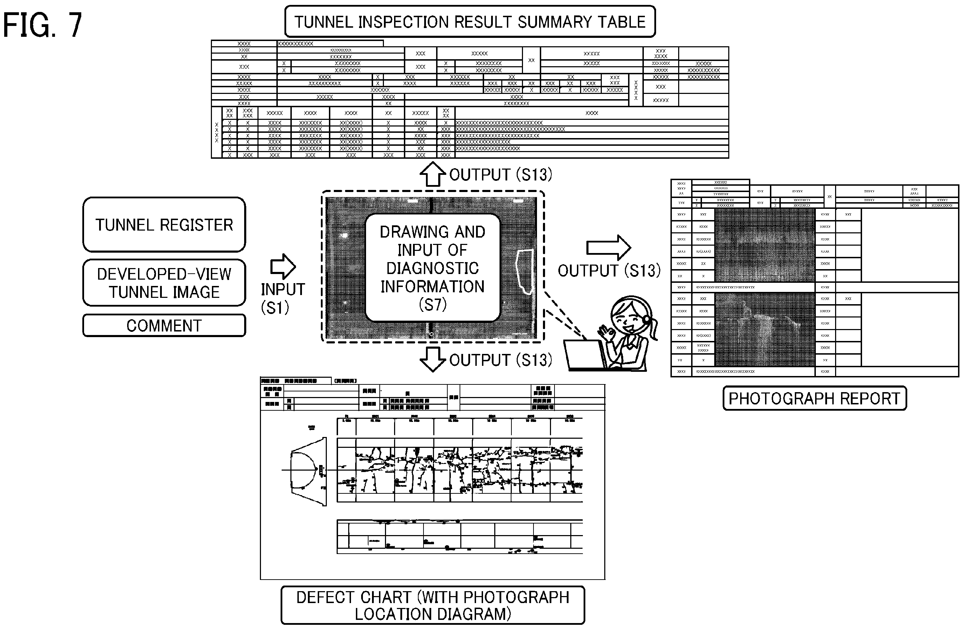

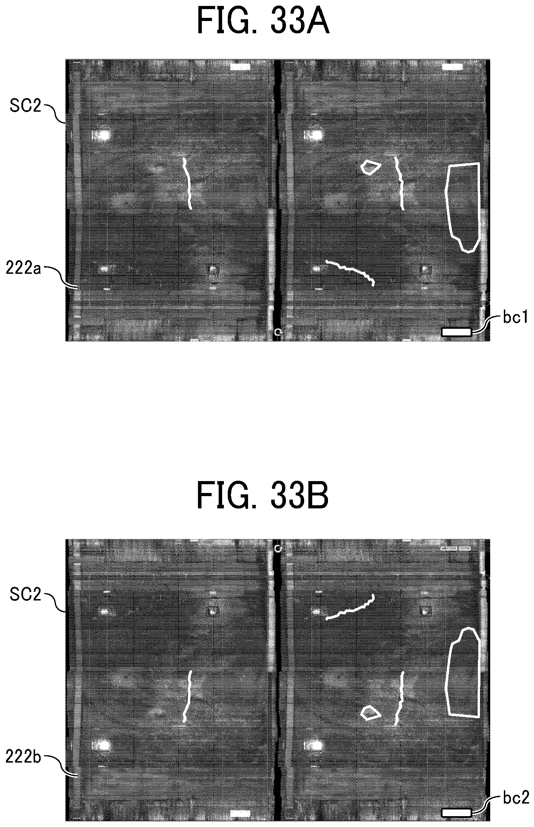

Next, processing or operation according to embodiments will be described with reference to FIGs. 6 to 33A and 33B. FIG. 6 is a sequence diagram illustrating a process for creating submission document data. FIG. 7 is an illustration of a process for creating a submission document according to the present embodiment.

First, as illustrated in FIG. 7, the user inputs data of the tunnel register, a developed-view tunnel image, and a comment to the drawing apparatus 3 (step S1). The data of the tunnel register, the developed-view tunnel image, and the comment is hereinafter referred to as "data of the tunnel register and the related information".

Then, the transmitting and receiving unit 31 of the drawing apparatus 3 uploads the data of the tunnel register and the related information input in step S1 to the diagnosis management server 5 (step S2). Thus, the transmitting and receiving unit 51 of the diagnosis management server 5 receives the data of the tunnel register and the related information. Then, in the diagnosis management server 5, the storing and reading unit 59 stores the data of the tunnel register and the related information received in step S2 in the storage unit 5000 (step S3).

Then, in response to a user's inputting of a diagnostic-target image, the transmitting and receiving unit 31 of the drawing apparatus 3 transmits a request for the data of the tunnel register and the related information to the diagnosis management server 5 (step S4). Thus, the transmitting and receiving unit 51 of the diagnosis management server 5 receives the request for the data of the tunnel register and the related information.

Then, in the diagnosis management server 5, the storing and reading unit 59 reads the data of the tunnel register and the related information stored in the storage unit 5000 in step S3 (step S5). Then, the transmitting and receiving unit 51 transmits the data of the tunnel register and the related information read in step S5 to the drawing apparatus 3 (step S6). Thus, the transmitting and receiving unit 31 of the drawing apparatus 3 downloads the data of the tunnel register and the related information.

Then, as illustrated in FIG. 7, the drawing apparatus 3 is operated by the user to perform a process for drawing the diagnostic-target image in a captured image 202 that is a portion of the developed-view tunnel image 201 described below and inputting diagnostic information (step S7). The processing of step S7 will be described in detail below. Then, the transmitting and receiving unit 31 transmits a request for creating the submission document to be submitted to the state government or any other organization, together with data of the drawn diagnostic-target element image and data of the input diagnostic information, to the diagnosis management server 5 (step S8). Thus, the transmitting and receiving unit 51 of the diagnosis management server 5 receives the request for creating the submission document, the data of the diagnostic-target element image, and the data of the diagnostic information.

Then, in the diagnosis management server 5, the storing and reading unit 59 stores the data of the diagnostic information and the data of the diagnostic-target element image in the diagnostic information management DB 5001 and the diagnostic-target element management DB 5002, respectively (step S9). Further, the storing and reading unit 59 reads the data of the diagnostic information and the data of the diagnostic-target element image, which are managed in the diagnostic information management DB 5001 and the diagnostic-target element management DB 5002, respectively, and also reads the data of the tunnel register and the related information from the storage unit 5000 to create the submission document (step S10). Then, the creation unit 53 of the diagnosis management server 5 uses the data of the diagnostic information, the data of the diagnostic-target element image, and the data of the tunnel register and the related information to create data of the submission document (i.e., the defect chart, the photograph report, and the tunnel inspection result summary table) as illustrated in FIG. 7 (step S11).

Then, the transmitting and receiving unit 51 transmits the data of the submission document to the drawing apparatus 3 (step S12). Thus, the transmitting and receiving unit 31 of the drawing apparatus 3 receives the data of the submission document.

Then, as illustrated in FIG. 7, the drawing apparatus 3 prints the data of the submission document and outputs the submission document to be submitted to the state government or any other organization (step S13). This allows the inspector to submit the submission document to the state government or any other organization. In one embodiment, the inspector may submit the data of the submission document to the state government or any other organization without printing the data of the submission document.

### Overview of Process for Drawing and Inputting Diagnostic Information

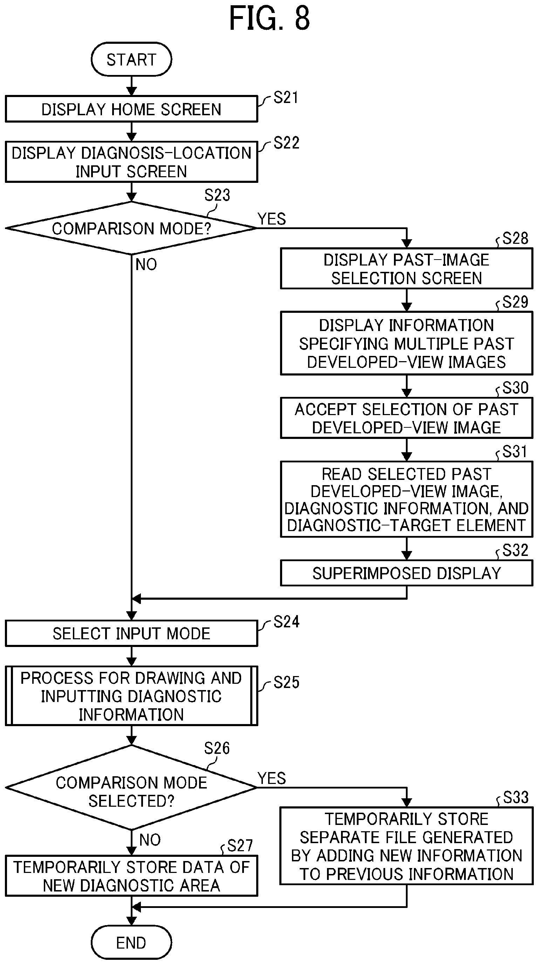

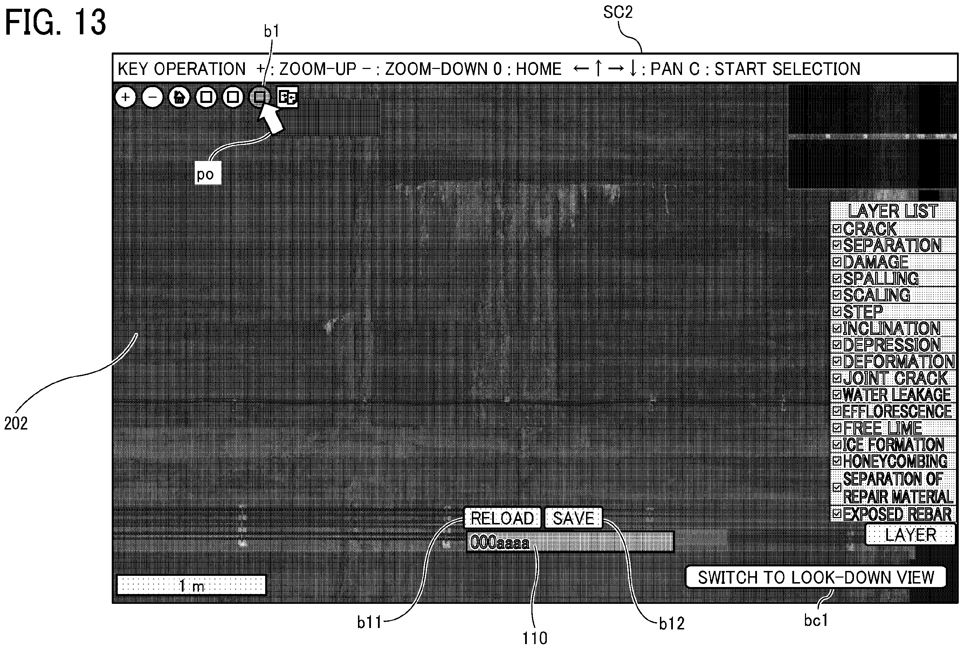

Next, an overview of the processing of step S7 described above will be described with reference to FIGs. 8, 12, and 13. FIG. 8 is a flowchart illustrating an overview of a process for drawing and inputting diagnostic information. FIG. 12 is an illustration of a home screen. FIG. 13 illustrates an example screen indicating selection of a diagnostic-target image (area) input mode on a diagnosis-location input screen.

First, as illustrated in FIG. 8, in response to an operation by the user of the drawing apparatus 3, the display control unit 34 causes the display 308 to display a home screen SC1 illustrated in FIG. 12 (step S21). The home screen SC1 displays the developed-view tunnel image 201 in a center portion thereof. The home screen SC1 further displays an overall-view screen SC10 in the upper right corner thereof. The overall-view screen SC10 indicates the overall view of the developed-view tunnel image 201. The home screen SC1 further displays in the upper left corner thereof a switch button b0, a selection button b1, a selection button b2, a selection button b3, a home button b4, a reduction button b5, and an enlargement button b6 in this order from right to left. The switch button b0 is for switching between a "single mode" and a "comparison mode". The selection button b1 is for selecting the diagnostic-target image (area) input mode. The selection button b2 is for selecting a diagnostic-target image (straight line) input mode. The selection button b3 is for selecting a diagnostic area input mode. The home button b4 is for returning to the home screen SC1. The reduction button b5 is for displaying the developed-view tunnel image 201 in a reduced size. The enlargement button b6 is for displaying the developed-view tunnel image 201 in an enlarged size.

The home screen SC1 further displays a "RELOAD" button b11 in a bottom center portion thereof. The "RELOAD" button b11 is for displaying items of data of diagnostic areas in a pull-down list. The items of data of the diagnostic areas have already been uploaded to the diagnosis management server 5. The home screen SC1 also displays a "SAVE" button b12 in the bottom center portion thereof. The "SAVE" button b12 is for collectively transmit items of data of diagnostic areas created and temporarily stored in the drawing apparatus 3 to the diagnosis management server 5 to store the data of the diagnostic areas in the diagnosis management server 5. The home screen SC1 also displays a save list 110 in the bottom center portion thereof. The save list 110 is for displaying the names of the items of data of the diagnostic areas downloaded from the diagnosis management server 5 and the names of the items of data of the diagnostic areas created and temporarily stored in the drawing apparatus 3. In response to the user selecting any one of the names of the items of data of the diagnostic areas in the save list 110 with a pointer po, the display control unit 34 displays a diagnosis-location input screen SC2 to present the corresponding diagnostic area.

The home screen SC1 further displays a layer list LL1 in a right center portion thereof to present types of defects. The layer list LL 1 displays types of defects such as cracks, water leakage, and calcification. The layer list LL1 has a layer structure in which one or more checkboxes are checked to display, in the developed-view tunnel image 201, a defect or defects corresponding to the checked checkbox or checkboxes. The home screen SC1 further displays a "LAYER" button b13 in a lower right portion thereof. The "LAYER" button b13 is for displaying the layer list LL1 in a pull-up window.

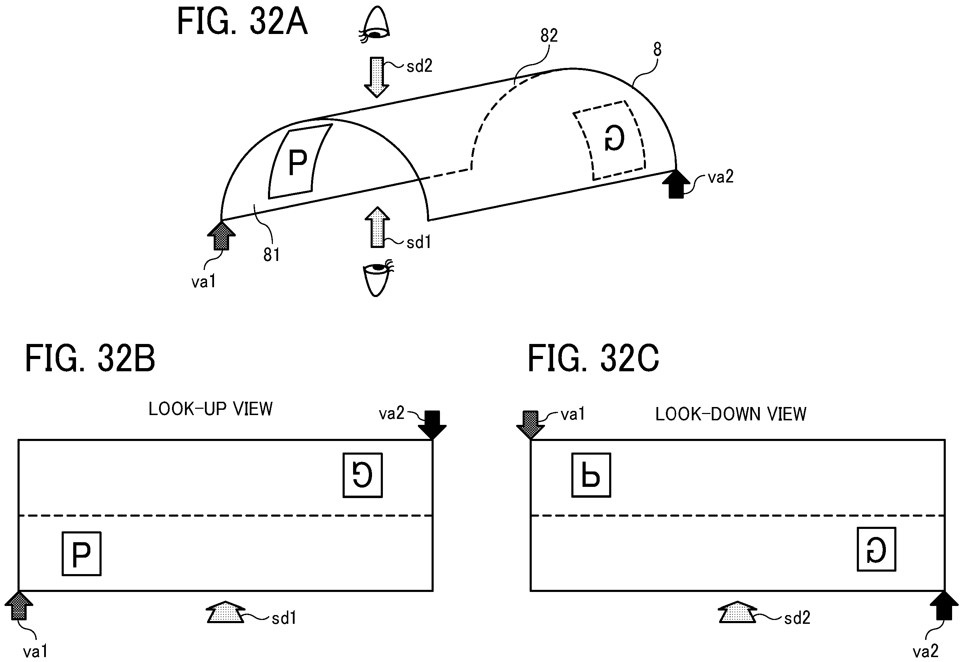

The user operates the mouse 312 on the home screen SC1 and selects, with the pointer po, a desired span for which the user desires to draw and input diagnostic information. Then, the display control unit 34 causes the display 308 to display the diagnosis-location input screen SC2 as illustrated in FIG. 13 (step S22). The diagnosis-location input screen SC2 displays the captured image 202. The captured image 202 is a portion of the developed-view tunnel image 201 corresponding to the selected span of the developed-view tunnel image 201. The diagnosis-location input screen SC2 further displays a line-of-sight switching button b1 in the lower right corner thereof. The line-of-sight switching button b1 is for switching the direction of the line of sight in the developed-view tunnel image 201. The switching of the direction of the line of sight will be described below with reference to FIGs. 32A to 32C, 33A, and 33B.

Then, in response to the user selecting a desired selection button among the selection buttons b1, b2, and b3 without pressing the switch button b0 (step S23: NO) with the pointer po, the acceptance unit 32 accepts the selection of an input mode (step S24). In this way, when the user does not press the switch button b0, the drawing apparatus 3 enters an input mode while remaining unchanged in the single mode. In response to the user drawing and inputting diagnostic information in accordance with the input mode, the drawing apparatus 3 executes a process for drawing and inputting diagnostic information (step S25). The processing of step S25 will be described in detail below for each input mode.

If the switch button b0 is not pressed in step S23 and the comparison mode is not selected, that is, if the single mode remains active (step S26: NO), the acceptance unit 32 accepts the operation of the mouse 312 or the like by the user, and accordingly the storing and reading unit 39 temporarily stores data of a new diagnostic area created in response to the process for drawing and inputting diagnostic information in the storage unit 3000 (step S27). The data of the new diagnostic area is transmitted from the drawing apparatus 3 to the diagnosis management server 5 in step S8 described above.

### Diagnostic-Target Image (Area) Input Mode

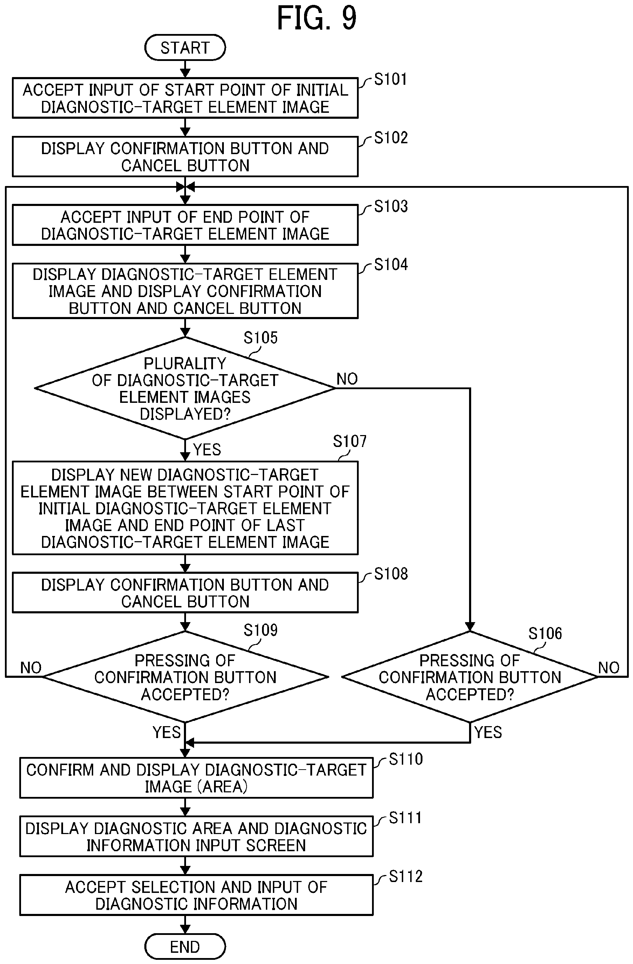

Next, the processing of step S24 in the diagnostic-target image (area) input mode will be described in detail with reference to FIGs. 9 and 13 to 20. The diagnostic-target image (area) input mode is mainly used when the diagnostic target is calcification or water leakage.

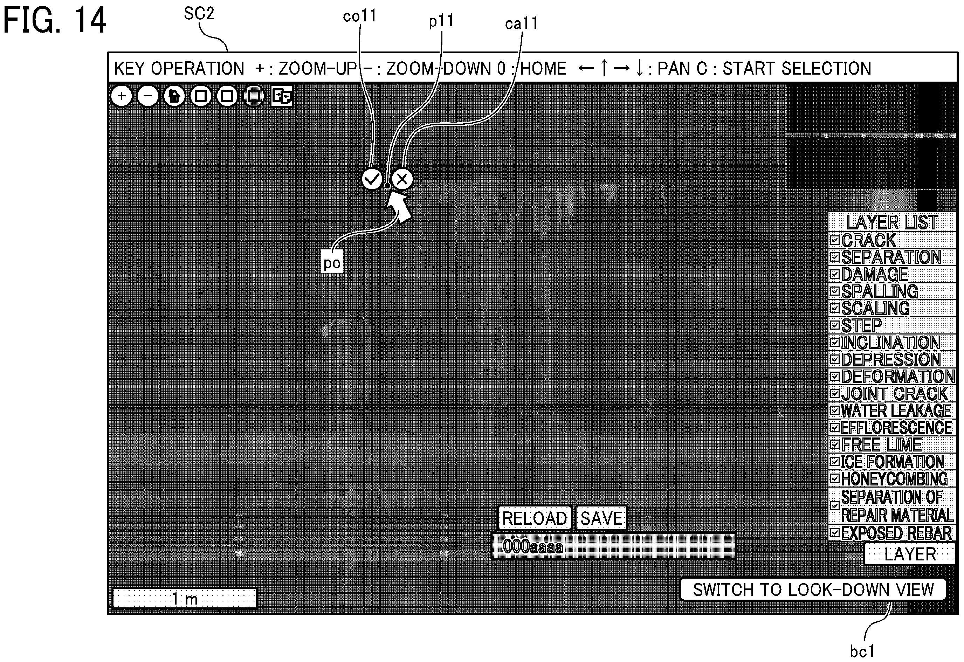

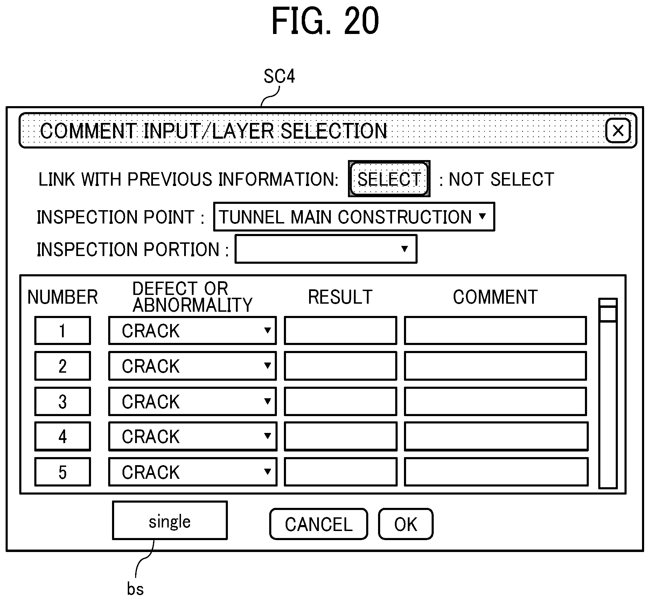

FIG. 9 is a flowchart illustrating a process in the diagnostic-target image (area) input mode. FIG. 13 illustrates an example screen indicating selection of the diagnostic-target image (area) input mode on the diagnosis-location input screen SC2. FIGs. 14 to 19 illustrate example screens for inputting a diagnostic-target image on the diagnosis-location input screen SC2. FIG. 20 illustrates of another example of the diagnosis-location input screen SC2.

First, in step S24, in response to the user selecting the selection button b1 with the pointer po as illustrated in FIG. 13, the display control unit 34 sets the input mode to the diagnostic-target image (area) input mode. Then, as illustrated in FIG. 14, in response to the user specifying, with the pointer po, a start point p11 of an initial diagnostic-target element image e11, the acceptance unit 32 accepts the input of the start point p11 of the initial diagnostic-target element image e11 (step S101). Accordingly, the display control unit 34 displays a confirmation button co11 and a cancel button ca11 around the start point p11 (step S102). The confirmation button co11 is a button for terminating the input of the diagnostic-target element image and confirming the diagnostic-target image. The cancel button ca11 is a button for canceling the selection of the specified start point p 11. Other confirmation buttons and other cancel buttons also have functions similar to those of the confirmation button co11 and the cancel button ca11, respectively.

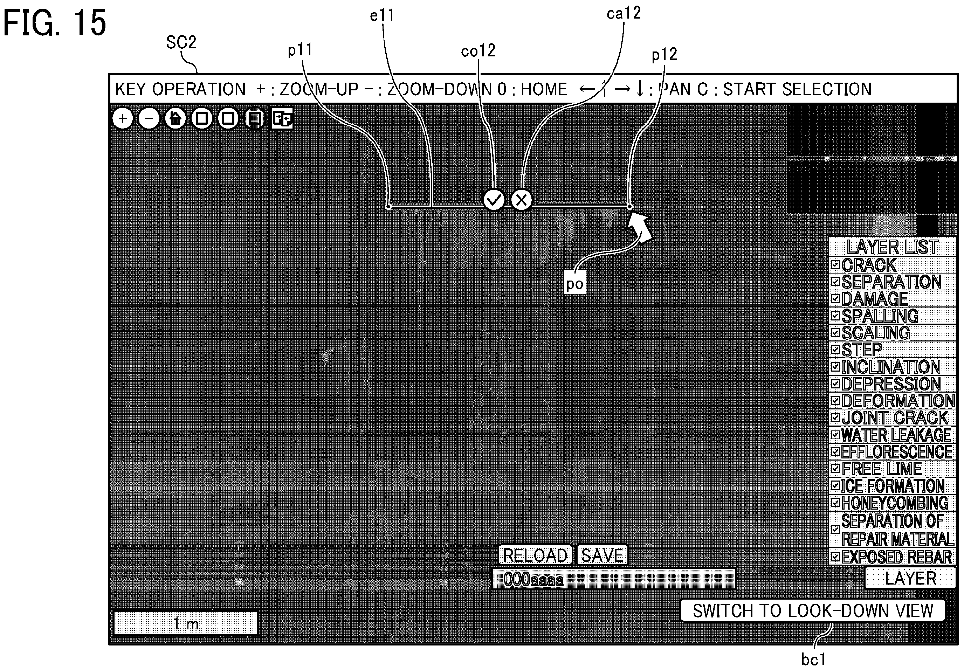

Then, as illustrated in FIG. 15, in response to the user specifying, with the pointer po, an end point p12 of the initial diagnostic-target element image e11, the acceptance unit 32 accepts the input of the end point p12 of the initial diagnostic-target element image e11 (step S103). Accordingly, the display control unit 34 displays the diagnostic-target element image e11 between the start point p11 and the end point p12 and also displays a confirmation button co12 and a cancel button ca12 at or around the center of the diagnostic-target element image e11 (step S104). As described above, the user specifies a start point and an end point to draw a diagnostic-target element image.

Then, the determination unit 35 determines whether a plurality of diagnostic-target element images are displayed in step S104 (step S105). At this point in time, a single diagnostic-target element image is displayed. Thus, the determination unit 35 determines that a plurality of diagnostic-target element images are not displayed (step S105: NO).

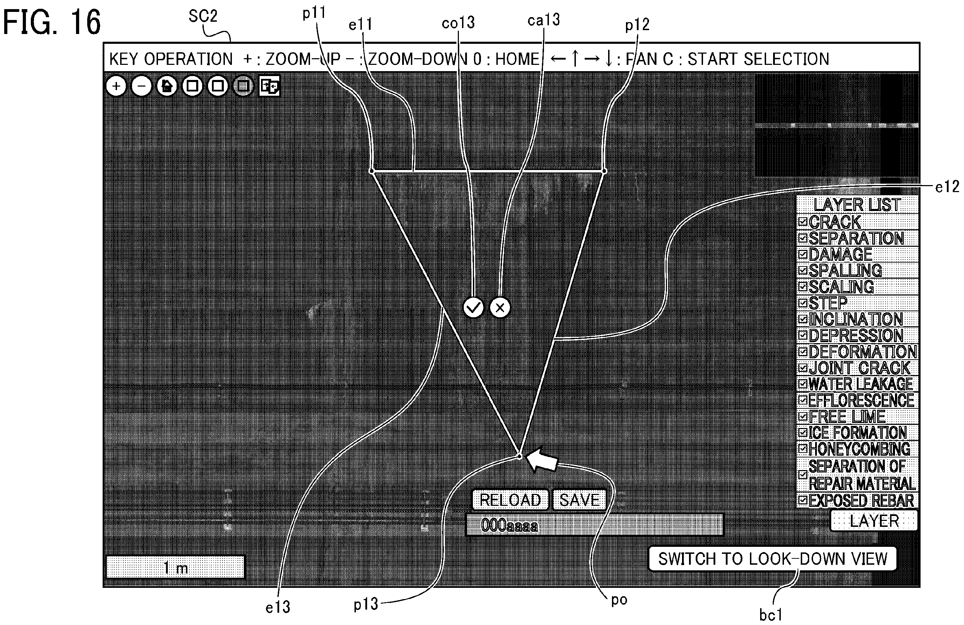

Then, the determination unit 35 determines whether the acceptance unit 32 has accepted pressing of the confirmation button (step S 106). If the determination unit 35 determines that the pressing of the confirmation button has been accepted (step S106: YES), the process proceeds to step S110 described below. On the other hand, if the determination unit 35 determines that the pressing of the confirmation button has not been accepted (step S106: NO), the process returns to step S103 described above. In FIG. 16, in response to the user specifying, with the pointer po, an end point p 13 of a diagnostic-target element image e12, the acceptance unit 32 accepts the input of the end point p13 of the diagnostic-target element image e12. A start point of the diagnostic-target element image e 12 corresponds to the end point p12 of the diagnostic-target element image e11. Thus, the user does not specify the start point of the diagnostic-target element image e12. Then, in step S104, the display control unit 34 displays the diagnostic-target element image e12 between the start point (i.e., the end point p12) and the end point p13, and also displays a confirmation button co13 and a cancel button ca13 between the diagnostic-target element image e11 and the diagnostic-target element image e12. Then, in step S105, the determination unit 35 determines whether a plurality of diagnostic-target element images are displayed in step S104. At this point in time, two diagnostic-target element images are displayed. Thus, the determination unit 35 determines that a plurality of diagnostic-target element images are displayed (step S105: YES). Then, the display control unit 34 newly displays a diagnostic-target element image e13 automatically between the start point p 11 of the initial diagnostic-target element image e11 and the end point p13 of the diagnostic-target element image e12, which is the last at this point in time (step S107). Further, the display control unit 34 changes the display positions of the confirmation button and the cancel button (step S108). In one example, the display control unit 34 changes the confirmation button co12 and the cancel button ca12 illustrated in FIG. 15 to the confirmation button co13 and the cancel button ca13 illustrated in FIG. 16.

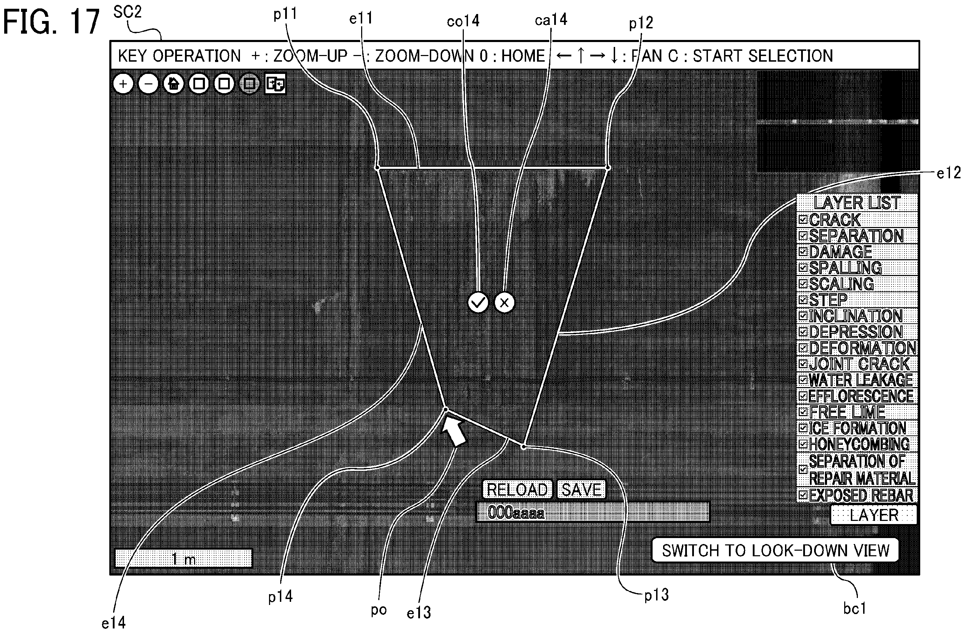

Then, the determination unit 35 determines whether the acceptance unit 32 has accepted pressing of the confirmation button (step S 109). If the determination unit 35 determines that the pressing of the confirmation button has not been accepted (step S109: NO), the process returns to step S103 described above. In FIG. 17, in response to the user specifying, with the pointer po, an end point p14 of the diagnostic-target element image e13, the acceptance unit 32 accepts the input of the end point p14 of the diagnostic-target element image e13. A start point of the diagnostic-target element image e13 corresponds to the end point p13 of the diagnostic-target element image e12. Thus, the user does not specify the start point of the diagnostic-target element image e13. Then, in step S104, the display control unit 34 displays the diagnostic-target element image e13 between the start point (i.e., the end point p13) and the end point p14, and also displays a confirmation button co14 and a cancel button ca14 between the diagnostic-target element images e11, e12, and e13. Then, in step S105, the determination unit 35 determines whether a plurality of diagnostic-target element images are displayed in step S104. At this point in time, three diagnostic-target element images are displayed. Thus, the determination unit 35 determines that a plurality of diagnostic-target element images are displayed (step S105: YES). Then, in step S107, the display control unit 34 newly displays a diagnostic-target element image e14 automatically between the start point p11 of the initial diagnostic-target element image e11 and the end point p14 of the diagnostic-target element image e13, which is the last at this point in time. Further, in step S108, the display control unit 34 changes the display positions of the confirmation button and the cancel button. In one example, the display control unit 34 changes the confirmation button co13 and the cancel button ca13 illustrated in FIG. 16 to the confirmation button co14 and the cancel button ca14 illustrated in FIG. 17.

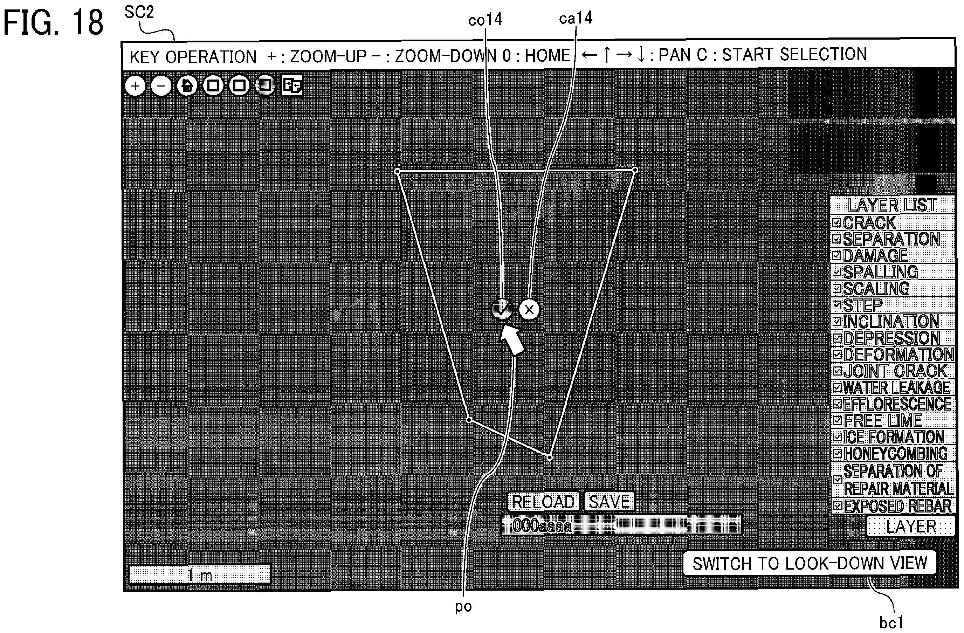

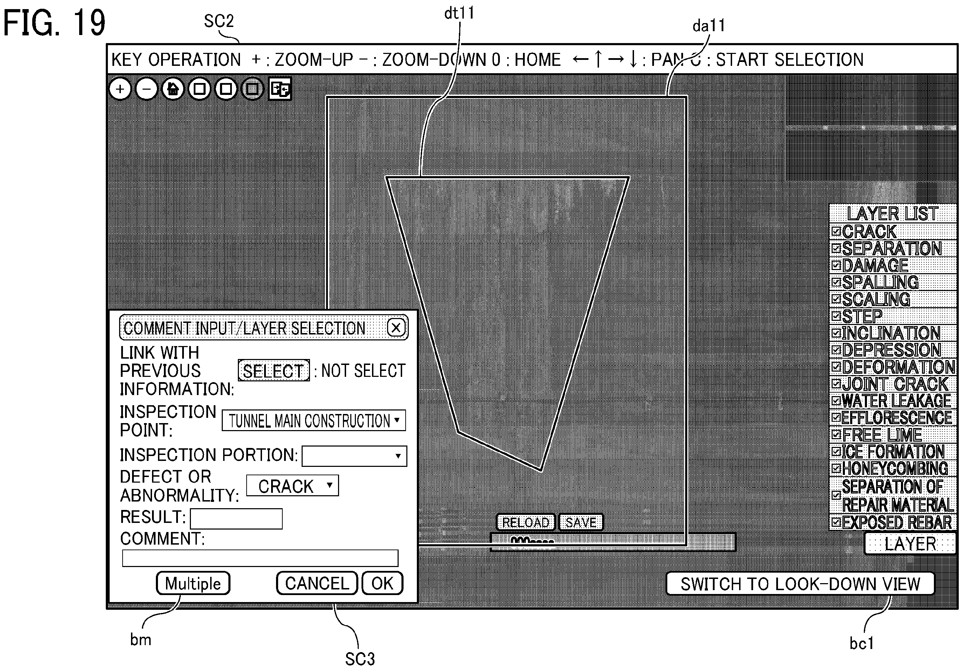

As illustrated in FIG. 18, in response to the user pressing the confirmation button co14 with the pointer po, the acceptance unit 32 accepts the pressing of the confirmation button co14, and the determination unit 35 determines that the confirmation button co14 has been accepted (step S109: YES). Then, the determination unit 35 confirms a diagnostic-target image (area), and the display control unit 34 displays a confirmed diagnostic-target image dt11 as illustrated in FIG. 19 (step S110). The display control unit 34 further displays a rectangular diagnostic area da11 including the diagnostic-target image dt11 and also displays a diagnostic information input screen SC3 (step S111). In this case, the display control unit 34 masks a portion other than the diagnostic information input screen SC3 to make the diagnostic information input screen SC3 conspicuous.

The diagnostic information input screen SC3 is a screen for the user to input diagnostic information by referring to the comment and the like recorded by the inspector or the assistant. The diagnostic information input screen SC3 displays a selection button for selecting a link with previous (diagnostic) information, a pull-down menu for selecting an object to be inspected (diagnosed), a pull-down menu for selecting a portion to be inspected (diagnosed), a pull-down menu for selecting a type of defect or abnormality, an input field for inputting a determination result, and an input field for inputting a comment. The link with previous (diagnostic) information is a process for making an already confirmed diagnostic area include a new diagnostic-target image. In one example, the link with previous (diagnostic) information is used when a diagnostic-target image representing water seepage has already been confirmed, a diagnostic area including the diagnostic-target image newly includes a diagnostic-target image representing a crack. The diagnostic information input screen SC3 also displays an "OK" button for confirming the input diagnostic information, and a "CANCEL" button for canceling the input diagnostic information. In response to the user pressing the "OK" button after selecting and inputting diagnostic information on the diagnostic information input screen SC3, the acceptance unit 32 accepts the selection and input of the diagnostic information (step S112). The diagnostic information input screen SC3 further displays an input switching button bm for switching from the diagnostic information input screen SC3 to a diagnostic information input screen SC4 illustrated in FIG. 20. In response to the pressing of the input switching button bm, the display control unit 34 switches to the diagnostic information input screen SC4 illustrated in FIG. 20. The diagnostic information input screen SC4 is a screen for inputting diagnostic information of each of multiple diagnostic-target images included in one diagnostic area. In one example, the diagnostic information input screen SC4 is used to collectively manage three diagnostic-target images included in one diagnostic area. The three diagnostic-target images represent a crack, calcification, and water leakage, for example. In this case, in response to data of the diagnostic information being uploaded from the drawing apparatus 3 to the diagnosis management server 5 later, as illustrated in FIG. 4, the diagnosis management server 5 manages the three diagnostic-target images (i.e., crack, calcification, and water leakage) by using the same diagnostic area number, namely, "3".

Like the diagnostic information input screen SC3, the diagnostic information input screen SC4 also displays an "OK" button for confirming the input diagnostic information, and a "CANCEL" button for canceling the input diagnostic information. The diagnostic information input screen SC4 further displays an input switching button bs for switching from the diagnostic information input screen SC4 to the diagnostic information input screen SC3 illustrated in FIG. 19. In response to the pressing of the input switching button bs, the display control unit 34 switches to the diagnostic information input screen SC3 illustrated in FIG. 19.

As a result of the process described above, the drawing of the diagnostic-target image dt11 and the diagnostic area da11 and the selection and input of the diagnostic information in the diagnostic-target image (area) input mode are completed.

### Diagnostic-Target Image (Straight Line) Input Mode

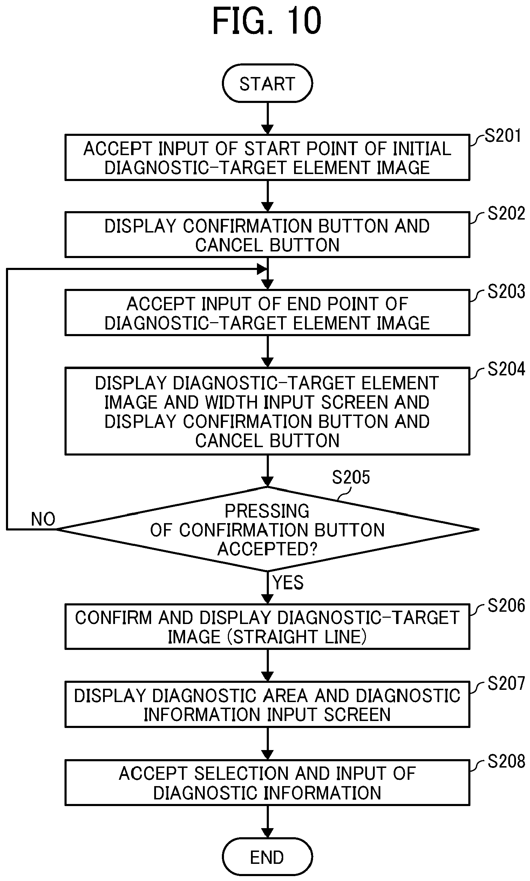

Next, the processing of step S24 in the diagnostic-target image (straight line) input mode will be described in detail with reference to FIGs. 10 and 21 to 26. The diagnostic-target image (straight line) input mode is mainly used when the diagnostic target is cracking.

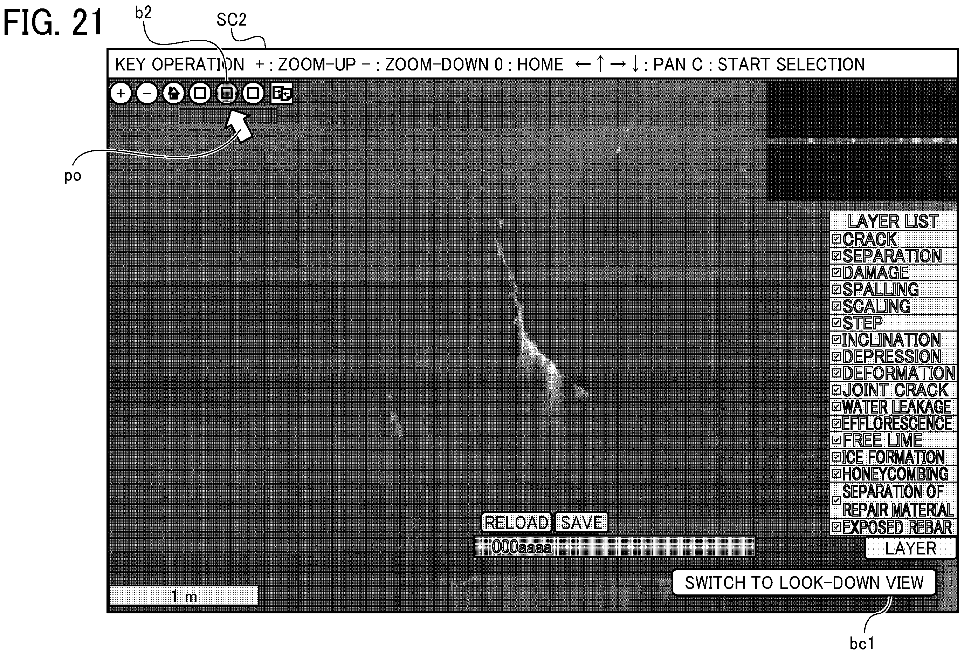

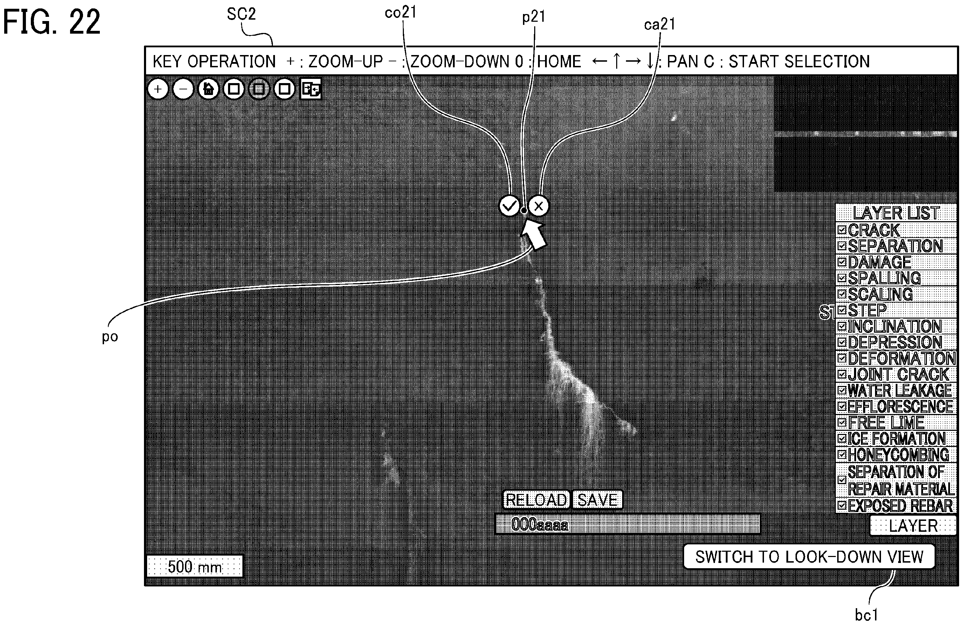

FIG. 10 is a flowchart illustrating a process in the diagnostic-target image (straight line) input mode. FIG. 21 illustrates an example screen indicating selection of the diagnostic-target image (straight line) input mode on the diagnosis-location input screen SC2. FIGs. 22 to 26 illustrate example screens for inputting a diagnostic-target image on the diagnosis-location input screen SC2.

First, in step S24, as illustrated in FIG. 21, in response to the user selecting the selection button b2 with the pointer po, the display control unit 34 sets the input mode to the diagnostic-target image (straight line) input mode. Then, as illustrated in FIG. 22, in response to the user specifying, with the pointer po, a start point p21 of an initial diagnostic-target element image e21, the acceptance unit 32 accepts the input of the start point p21 of the initial diagnostic-target element image e21 (step S201). Accordingly, the display control unit 34 displays a confirmation button co21 and a cancel button ca21 around the start point p21 (step S202).

Then, as illustrated in FIG. 23, in response to the user specifying, with the pointer po, an end point p22 of the initial diagnostic-target element image e21, the acceptance unit 32 accepts the input of the end point p22 of the initial diagnostic-target element image e21 (step S203). Accordingly, the display control unit 34 displays the diagnostic-target element image e21 and the width input screen ws1 between the start point p21 and the end point p22 and also displays a confirmation button co22 and a cancel button ca22 at or around the center of the diagnostic-target element image e21 (step S204). As described above, the user specifies a start point and an end point to draw a diagnostic-target element image.

The width input screen ws1 is a screen for inputting the width of a straight line for a crack as a diagnostic-target element. The width input screen ws1 is displayed between the start point p21 and the end point p22 near the diagnostic-target element image. The user refers to the numerical value (the numerical value written with the special chalk) indicated in the developed-view tunnel image 201 or the comment and enters a value of the width. In response to the user entering a numerical value in the width input screen ws1, the acceptance unit 32 accepts input of the entered numerical value. As illustrated in FIG. 24, the display control unit 34 displays the entered numerical value ("0.5").

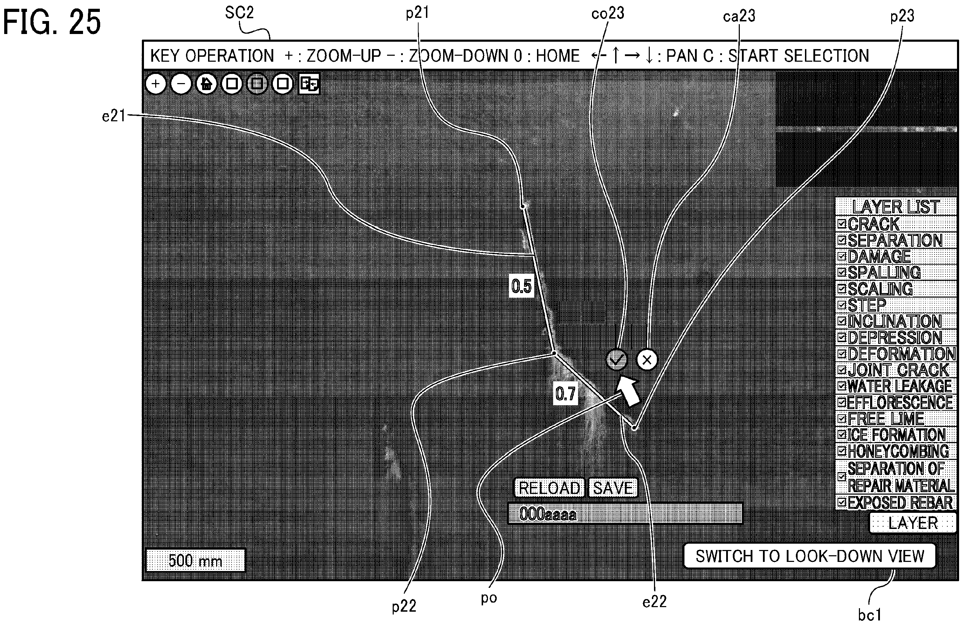

Then, the determination unit 35 determines whether the acceptance unit 32 has accepted pressing of the confirmation button (step S205). If the determination unit 35 determines that the pressing of the confirmation button has not been accepted (step S205: NO), the process returns to step S203 described above. In FIG. 24, in response to the user specifying, with the pointer po, an end point p23 of a diagnostic-target element image e22, the acceptance unit 32 accepts the input of the end point p23 of the diagnostic-target element image e22. A start point of the diagnostic-target element image e22 corresponds to the end point p22 of the diagnostic-target element image e21. Thus, the user does not specify the start point of the diagnostic-target element image e22. Then, in step S204, the display control unit 34 displays the diagnostic-target element image e22 and a width input screen ws2 between the start point (i.e., the end point p22) and the end point p23, and also displays a confirmation button co23 and a cancel button ca23 between the diagnostic-target element images e21 and e22. In response to the user entering a numerical value in the width input screen ws2, the acceptance unit 32 accepts input of the entered numerical value. As illustrated in FIG. 25, the display control unit 34 displays the entered numerical value ("0.7").

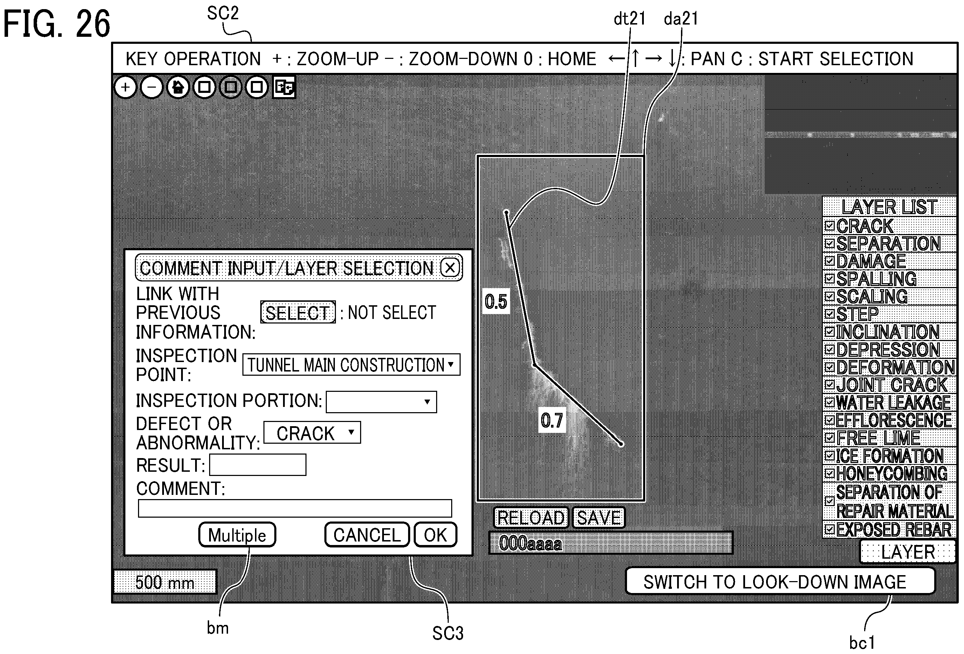

As illustrated in FIG. 25, in response to the user pressing the confirmation button co23 with the pointer po, the acceptance unit 32 accepts the pressing of the confirmation button co23, and the determination unit 35 determines that the confirmation button co23 has been accepted (step S205: YES). Then, the determination unit 35 confirms a diagnostic-target image (straight line), and the display control unit 34 displays a confirmed diagnostic-target image dt21 as illustrated in FIG. 26 (step S206). The display control unit 34 further displays a rectangular diagnostic area da21 including the diagnostic-target image dt21 and also displays a diagnostic information input screen SC3 (step S207). In this case, the display control unit 34 masks a portion other than the diagnostic information input screen SC3 to make the diagnostic information input screen SC3 conspicuous. In response to the user pressing the "OK" button after selecting and inputting diagnostic information on the diagnostic information input screen SC3, the acceptance unit 32 accepts the selection and input of the diagnostic information (step S208).

As a result of the process described above, the drawing of the diagnostic-target image dt21 and the diagnostic area da21 and the selection and input of the diagnostic information in the diagnostic-target image (straight line) input mode are completed.

### Diagnostic Area Input Mode

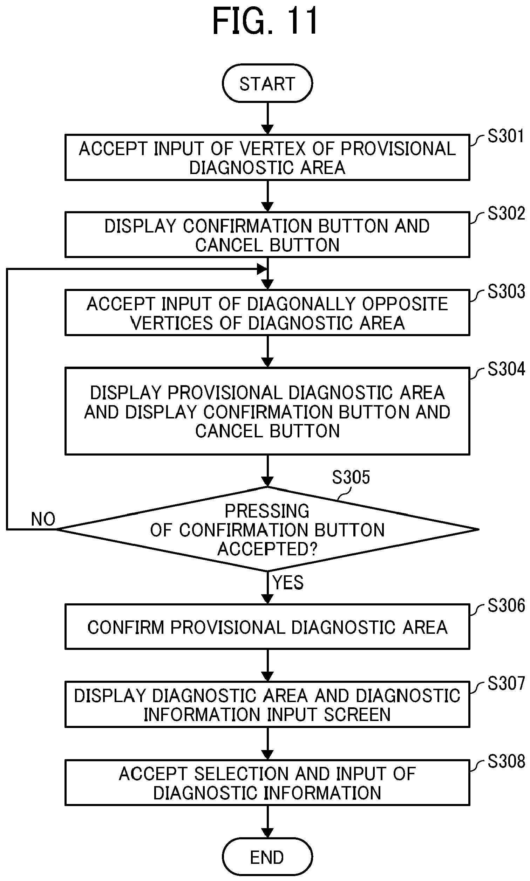

Next, the processing of step S24 in the diagnostic area input mode will be described in detail with reference to FIGs. 11 and 27 to 31. The diagnostic area input mode is mainly used in a case where a diagnostic-target image is specified after a diagnostic area has been specified.

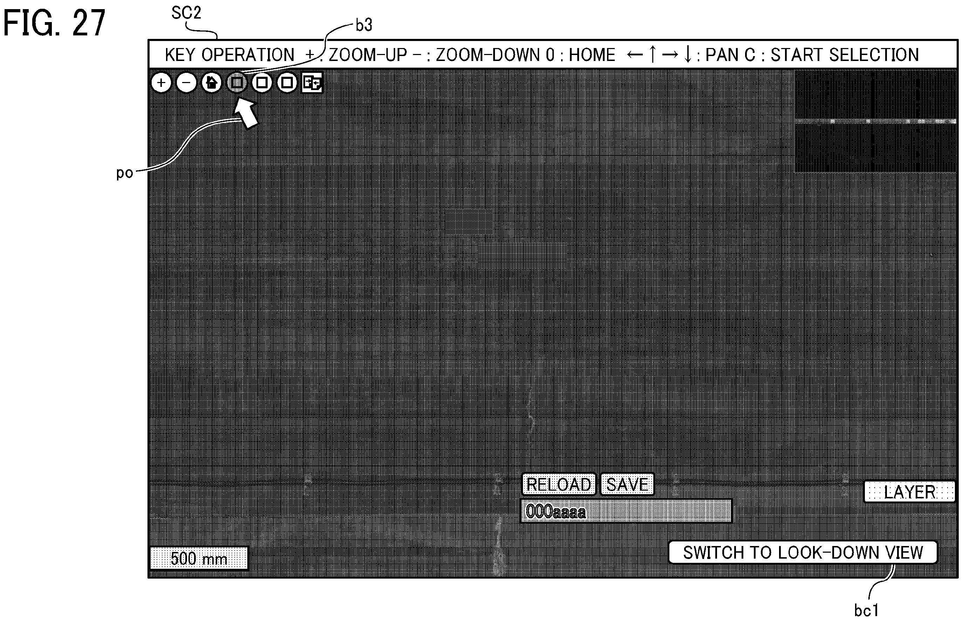

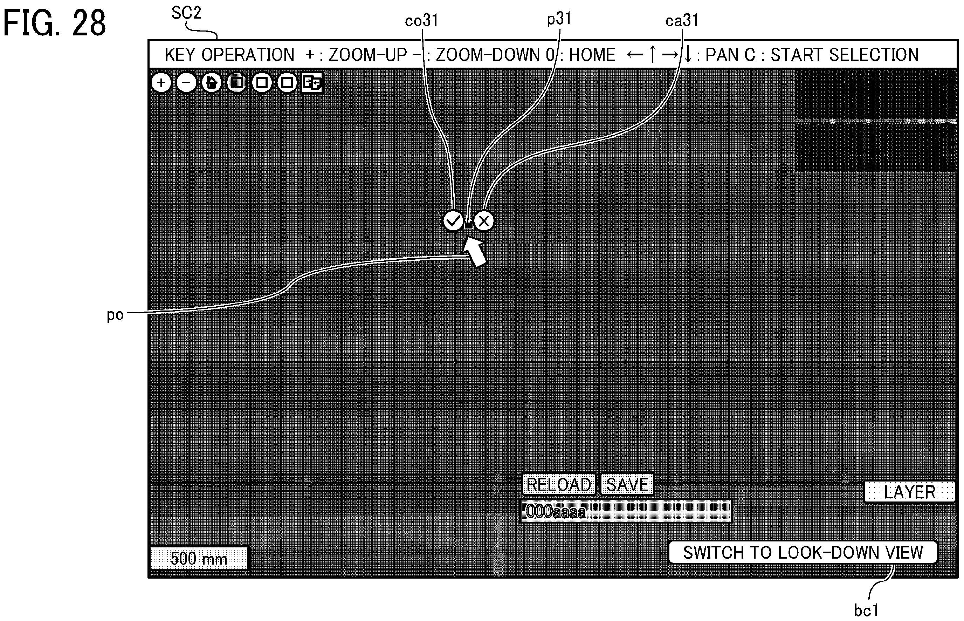

FIG. 11 is a flowchart illustrating a process in the diagnostic area input mode. FIG. 27 illustrates an example screen indicating selection of the diagnostic area input mode on the diagnosis-location input screen SC2. FIGs. 28 to 31 illustrate example screens for inputting a diagnostic area on the diagnosis-location input screen SC2.

First, in step S24, as illustrated in FIG. 27, in response to the user selecting the selection button b3 with the pointer po, the display control unit 34 sets the input mode to the diagnostic area input mode. Then, as illustrated in FIG. 28, in response to the user specifying a vertex p31 of a provisional diagnostic area da03 with the pointer po, the acceptance unit 32 accepts the input of the vertex p31 of the provisional diagnostic area da03 (step S301). Accordingly, the display control unit 34 displays a confirmation button co31 and a cancel button ca31 around the vertex p31 (step S302).

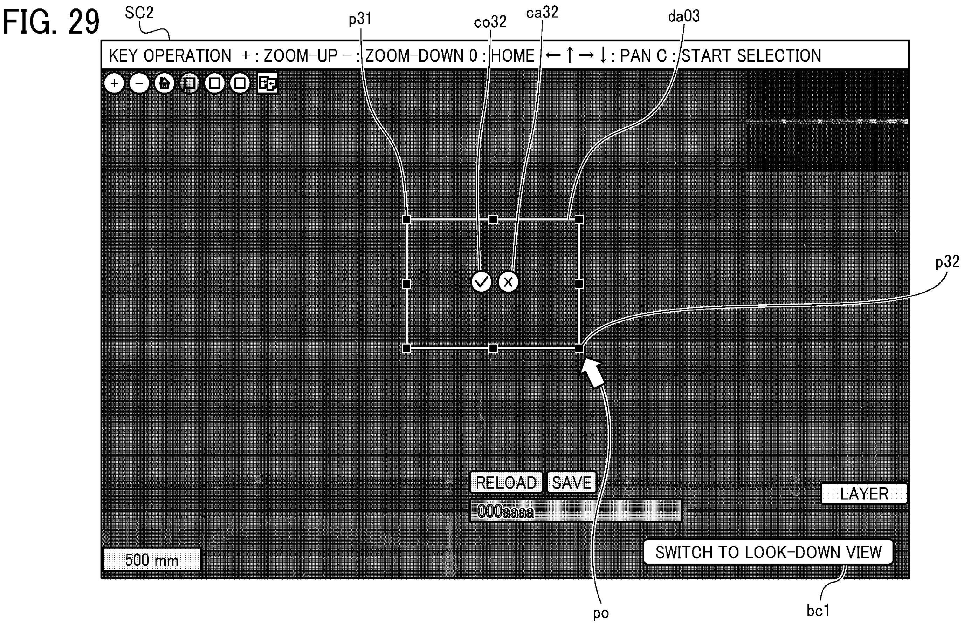

Then, as illustrated in FIG. 29, in response to the user specifying a vertex p32 diagonally opposite to the vertex p31 of the provisional diagnostic area da03 with the pointer po, the acceptance unit 32 accepts the input of the vertex p32 diagonally opposite to the vertex p31 of the provisional diagnostic area da03 (step S303). Accordingly, the display control unit 34 displays the provisional diagnostic area da03 having a rectangular shape with diagonally opposite vertices being the vertex p31 and the vertex p32, and also displays a confirmation button co32 and a cancel button ca32 at or around the center of the provisional diagnostic area da03 (step S304). As described above, the user specifies two diagonally opposite vertices to draw a diagnostic area.

Then, the determination unit 35 determines whether the acceptance unit 32 has accepted pressing of the confirmation button (step S305). If the determination unit 35 determines that the pressing of the confirmation button has not been accepted (step S305: NO), the process returns to step S303 described above. In this case, after specifying the vertex p32, the user changes the vertex p31 or the vertex p32 to further increase or decrease the area of the provisional diagnostic area da03.

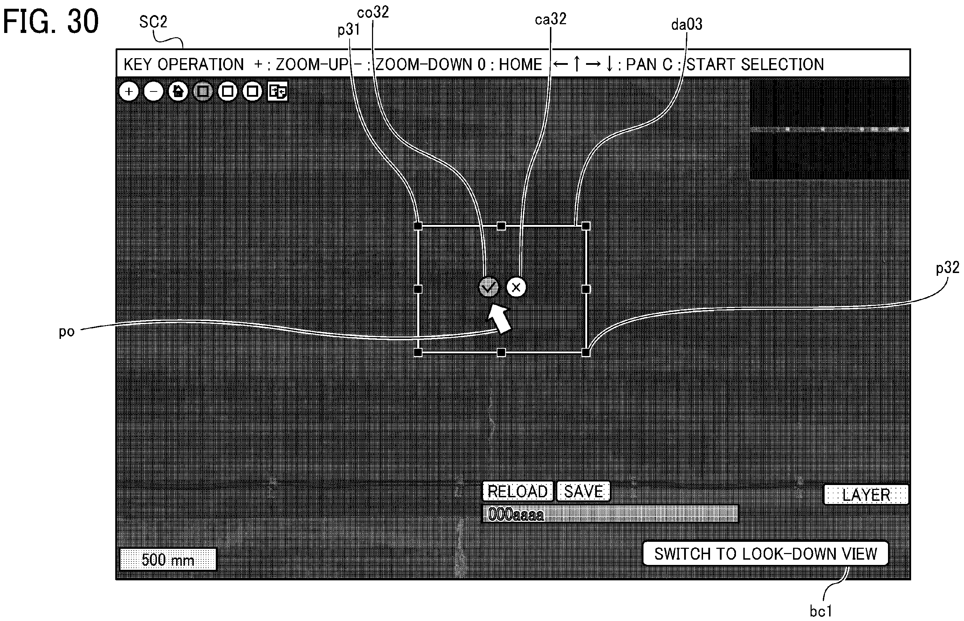

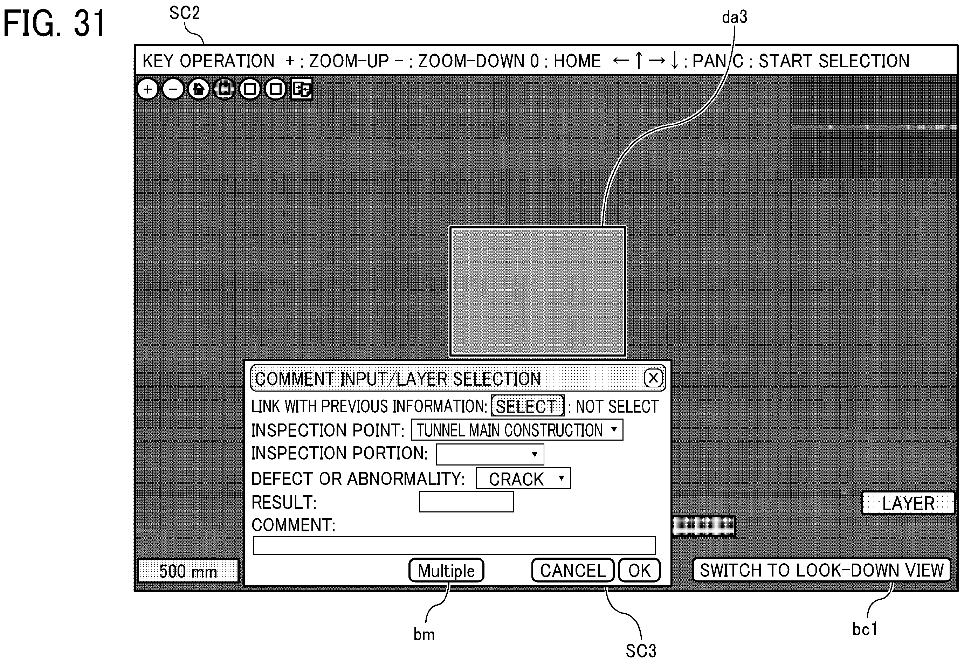

In contrast, as illustrated in FIG. 30, in response to the user pressing the confirmation button co32 with the pointer po, the acceptance unit 32 accepts the pressing of the confirmation button co32, and the determination unit 35 determines that the confirmation button co32 has been accepted (step S305: YES). Then, the determination unit 35 confirms the provisional diagnostic area da03 (step S306). The display control unit 34 further displays a rectangular diagnostic area da3 as illustrated in FIG. 31, like the confirmed provisional diagnostic area da03, and also displays a diagnostic information input screen SC3 (step S307). In this case, the display control unit 34 masks a portion other than the diagnostic information input screen SC3 to make the diagnostic information input screen SC3 conspicuous. In response to the user pressing the "OK" button after selecting and inputting diagnostic information on the diagnostic information input screen SC3, the acceptance unit 32 accepts the selection and input of the diagnostic information (step S308).

As a result of the process described above, the drawing of the diagnostic area da3 and the selection and input of the diagnostic information in the diagnostic area input mode are completed. After that, in one embodiment, the user draws a diagnostic-target image in the diagnostic area da3 in a way similar to that in the diagnostic-target image (area) input mode and the diagnostic-target image (straight line) input mode.

### Line-of-Sight Switching

Next, a process for line-of-sight switching in the developed-view tunnel image 201 will be described with reference to FIGs. 32A to 32C, 33A, and 33B. FIG. 32A illustrates a relationship between the tunnel 8 and line-of-sight directions. FIG. 32B conceptually illustrates a look-up view, and FIG. 32C conceptually illustrates a look-down view. FIGs. 33A and 33B are illustrations of the diagnosis-location input screen SC2 on which the line-of-sight directions are switched. FIG. 33A illustrates an example of the look-up view, and FIG. 33B illustrates an example of the look-down view.

As illustrated in FIGs. 32A to 32C, the developed-view tunnel image 201 is an image captured by a camera looking up at the ceiling of the tunnel 8 inside the tunnel 8. The captured image is referred to as a "look-up view". As illustrated in FIG. 7, the defect chart to be submitted to the state government or any other organization is an image looking down from outside the tunnel 8 (i.e., looking down from above the tunnel 8). This image is referred to as a "look-down view".

As illustrated in FIG. 32A, an image looking at an inner side 81 of the tunnel 8 in a line-of-sight direction sd1 is a look-up view. Examples of such an image include an image as illustrated in FIG. 32B. In this case, a virtual arrow va1 in FIG. 32A is pointing upward at the bottom left in FIG. 32B, and a virtual arrow va2 in FIG. 32A is pointing downward at the top right in FIG. 32B.

An image looking at the tunnel 8 from an outer side 82 of the tunnel 8 in a line-of-sight direction sd2 is a look-down view. Examples of such an image include an image as illustrated in FIG. 32B. In this case, the virtual arrow va1 in FIG. 32A is pointing downward at the top left in FIG. 32C, and the virtual arrow va2 in FIG. 32A is pointing upward at the bottom right in FIG. 32C. The look-up view and the look-down view are flipped upside down from each other.

To display a developed-view image upside down, the display control unit 34 displays a diagnostic-target element image stored in the storage unit 3000 with the coordinate "Y" of the two-dimensional position coordinates (X, Y) changed to the coordinate "-Y".

The user presses a line-of-sight switching button bc1 to switch to a look-down view on the diagnosis-location input screen SC2 illustrated in FIG. 33A. Then, the acceptance unit 32 accepts the pressing of the line-of-sight switching button bc1, and the display control unit 34 changes the display from the look-up view illustrated in FIG. 33A to the look-down view illustrated in FIG. 33B. The user presses a line-of-sight switching button bc2 to switch to a look-up view on the diagnosis-location input screen SC2 illustrated in FIG. 33B. Then, the acceptance unit 32 accepts the pressing of the line-of-sight switching button bc2, and the display control unit 34 changes the display from the look-down view illustrated in FIG. 33B to the look-up view illustrated in FIG. 33A. The user may use either of the look-up view and the look-down view to draw a diagnostic-target element or a diagnostic area. In this case, the coordinates of the position of a diagnostic-target element image or a diagnostic area stored in the storage unit 3000 are not changed, but the display control unit 34 merely changes the mode of display.

### Process for Attaching Attachment Image to Photograph Report

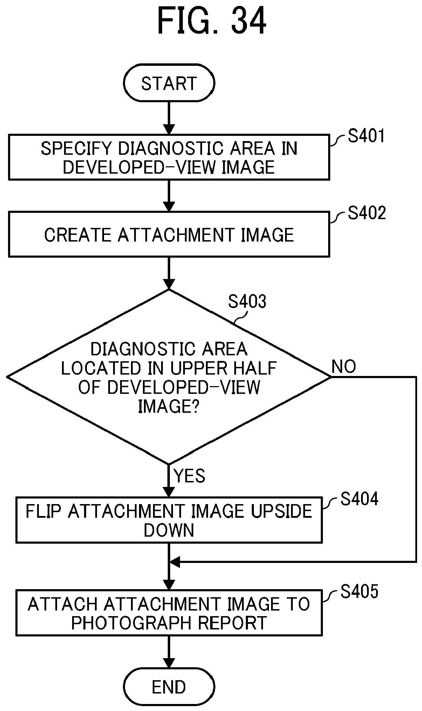

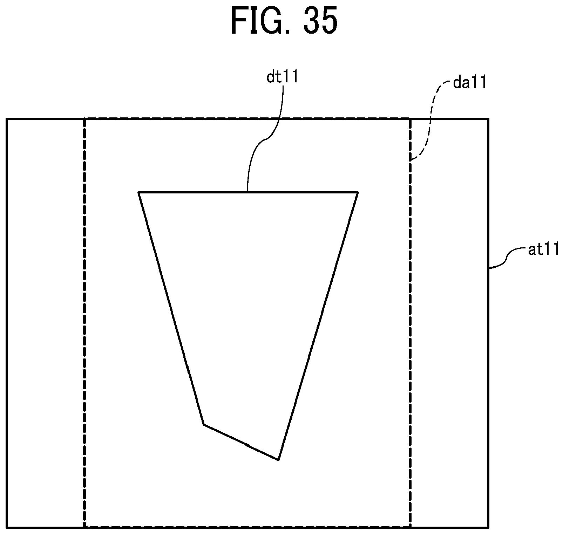

Next, a process for creating the data of the submission document illustrated in FIG. 6 will be described. Specifically, a process for attaching an attachment image to a photograph report will be described with reference to FIGs. 34 and 35. FIG. 34 is a flowchart illustrating a method for attaching an attachment image to a photograph report. FIG. 35 illustrates a relationship between a diagnostic-target image, a diagnostic area, and an attachment image.

As illustrated in FIG. 34, the creation unit 53 specifies a diagnostic area in a developed-view image, based on the data of the position coordinates and the height and width of the diagnostic area, which are read from the diagnostic information management DB 5001 (step S401).

Then, the creation unit 53 creates the attachment image in a maximum size to include the diagnostic area in accordance with the aspect ratio of the attachment image (step S402). For example, as illustrated in FIG. 35, in the case of the diagnostic area da11 including the diagnostic-target image dt11 as illustrated in FIG. 19, the creation unit 53 creates an attachment image at11 having a rectangular shape such that a width defined by two opposing sides of the rectangular shape corresponds to the width of the diagnostic area da11.

Then, the determination unit 55 determines whether the diagnostic area is located in the upper half of the developed-view image (step S403). If the determination unit 55 determines that the diagnostic area is located in the upper half of the developed-view image, the creation unit 53 vertically flips the attachment image created in step S402 (step S404). In other words, the creation unit 53 converts the attachment image such that the vertical orientation of the attachment image is the same as the line-of-sight direction of a person looking up at the structure from below. For example, as illustrated in FIGs. 32A to 32C, an attachment image "P" located in the lower half of the developed-view image is attached as-is to the photograph report, whereas an attachment image "G" located in the upper half of the developed-view image is flipped upside down because the corresponding diagnostic area on the inner side 81 of the tunnel 8 is presented upside down in the developed-view image. Then, the creation unit 53 attaches the attachment image to the developed-view image at a predetermined position (step S405).

On the other hand, if the determination unit 55 determines in step S403 described above that the diagnostic area is not located in the upper half (i.e., located in the lower half) of the developed-view image, the processing of step S405 described above is performed.

Then, the process for attaching the attachment image to the photograph report ends. The creation of a photograph report indicating diagnostic information of a structure in the way described above provides an effect of reducing errors compared to existing approaches.

### Processes for Comparison Mode

Next, processes in the input modes for the comparison mode will be described with reference to FIGs. 8 and 36 to 45. In the following description, of the diagnostic-target image (area) input mode (see FIG. 9), the diagnostic-target image (straight line) input mode (see FIG. 10), and the diagnostic area input mode (see FIG. 11), the diagnostic-target image (straight line) input mode is implemented in the comparison mode. In one embodiment, the diagnostic-target image (area) input mode or the diagnostic area input mode is implemented in the comparison mode.

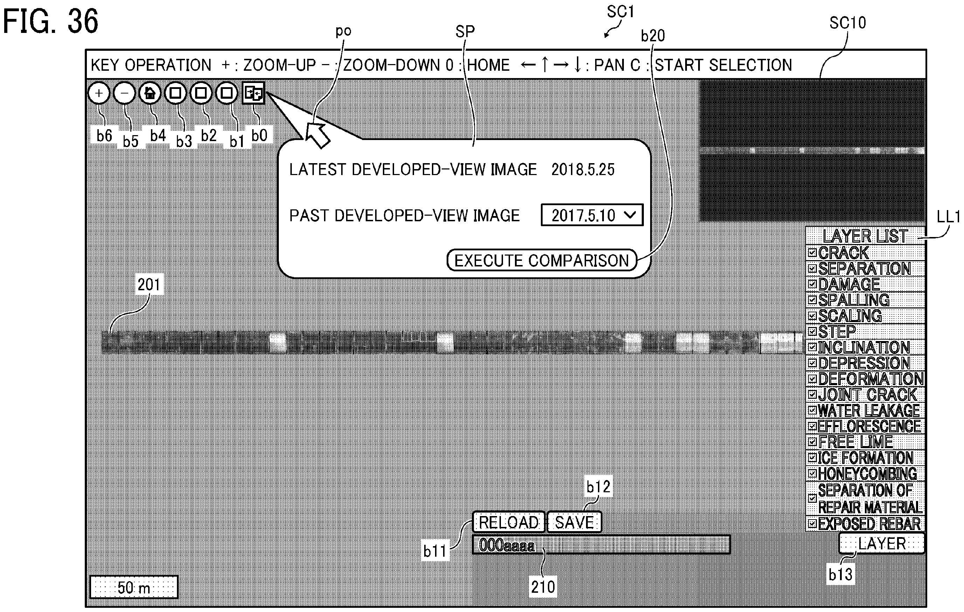

In FIG. 8, if the comparison mode is set in response to the user pressing the switch button b0 with the pointer po (step S23: YES), as illustrated in FIG. 36, the display control unit 34 displays a past-image selection screen SP near the switch button b0 (step S28). The past-image selection screen SP displays information (in the illustrated example, inspection date) specifying the latest developed-view image, information (inspection date) specifying a past developed-view image, and an "Execute Comparison" button b11. The latest developed-view image is an image for which the diagnostic-target image is currently input. The past developed-view image is an image for which the diagnostic-target image was input in the past. In one embodiment, a pull-down menu is used to select any one of past developed-view images. The "Execute Comparison" button b11 is a button pressed by the user to compare the latest developed-view image with the selected past developed-view image.

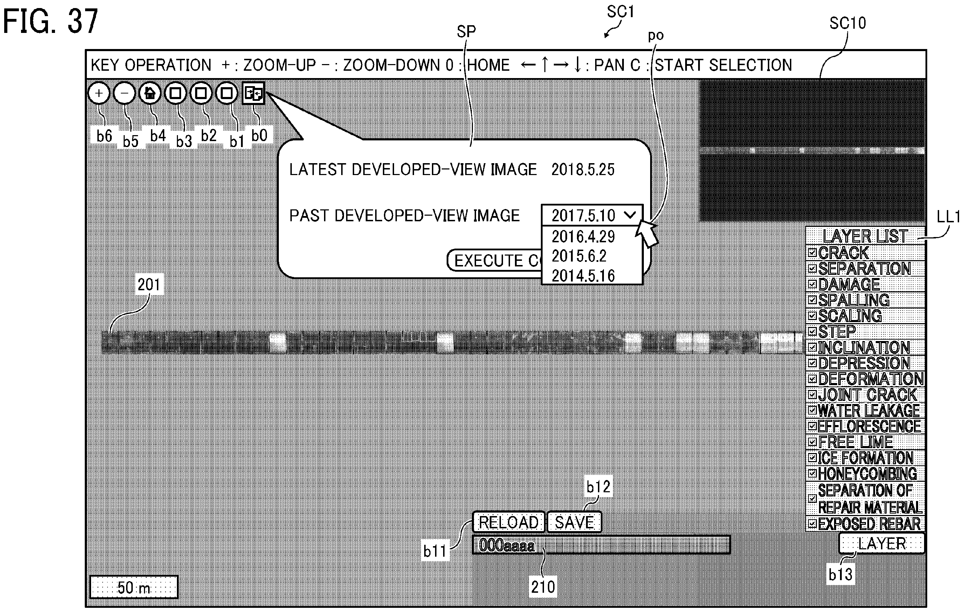

In response to the user opening the pull-down menu for past developed-view images with the pointer po, as illustrated in FIG. 37, the display control unit 34 displays information (inspection dates) specifying multiple past developed-view images (step S29). Then, in response to the user selecting a desired inspection date with the pointer po, the acceptance unit 32 accepts the selection of the past developed-view image to be compared with the latest developed-view image (step S30).

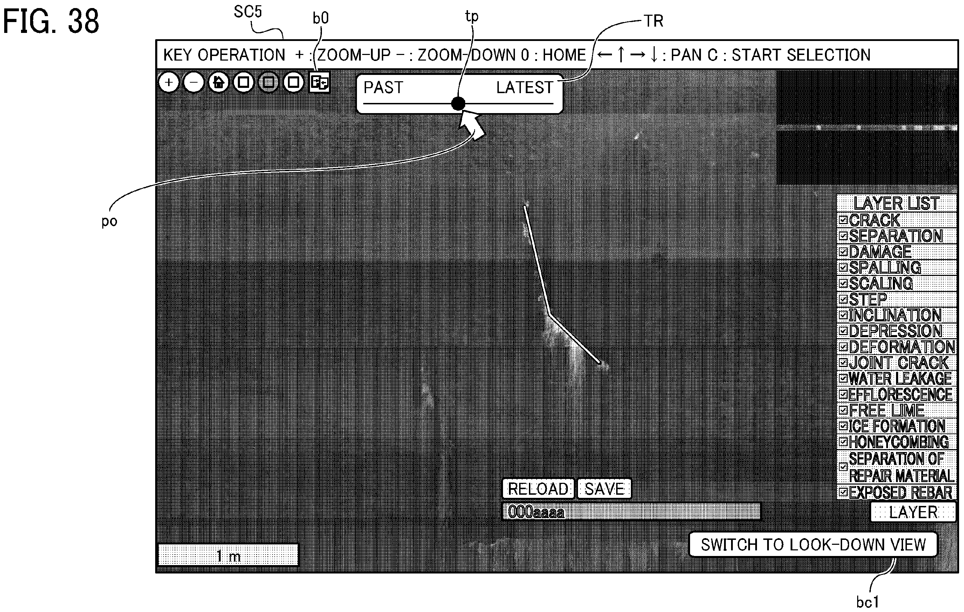

Then, in response to the user pressing the "Execute Comparison" button b11 with the pointer po, the storing and reading unit 39 reads the past developed-view image selected in step S30 and the diagnostic information (see FIG. 4) and the diagnostic-target element (see FIG. 5) of the past developed-view image from the storage unit 3000 (step S31). Accordingly, as illustrated in FIG. 38, the display control unit 34 displays a diagnosis-location input screen SC5 on which a diagnostic target in the latest developed-view image is superimposed on a diagnostic target in the past developed-view image and the corresponding past diagnostic-target image (step S32).

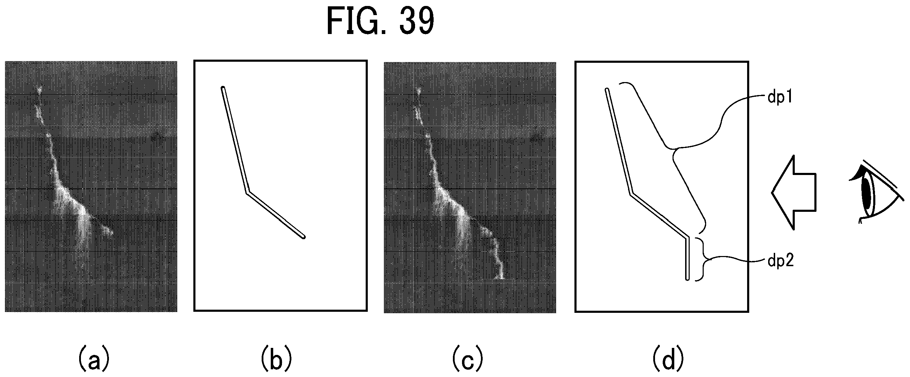

Superimposed display will now be described with reference to FIG. 39. FIG. 39 is ab illustration of a diagnostic target and a diagnostic-target image presented hierarchically. (a) of FIG. 39 illustrates a diagnostic target in a past developed-view image. (b) of FIG. 39 illustrates a past diagnostic-target image. (c) of FIG. 39 illustrates a diagnostic target in the latest developed-view image, (d) of FIG. 39 illustrates the latest diagnostic-target image.

At the point in time of the initial display illustrated in FIG. 38, as illustrated in FIG. 39, the past developed-view image is displayed in the bottom layer ((a) of FIG. 39), the corresponding past diagnostic-target image is displayed in the middle layer ((b) of FIG. 39), and the latest developed-view image is displayed in the top layer ((c) of FIG. 39). The latest diagnostic-target image ((d) of FIG. 39D) has not been drawn at this point in time. When drawn, the latest diagnostic-target image ((d) of FIG. 39) is displayed as an image in the top layer.

The diagnosis-location input screen SC5 displays a transparency setting area TR in an upper portion thereof. The transparency setting area TR includes a transparency point tp. The transparency point tp is used to make a change such that the display transparency of the set of past images including the past developed-view image and the corresponding past diagnostic-target image is inversely proportional to the display transparency of the set of latest images including the latest developed-view image and the latest diagnostic-target image (if drawn).

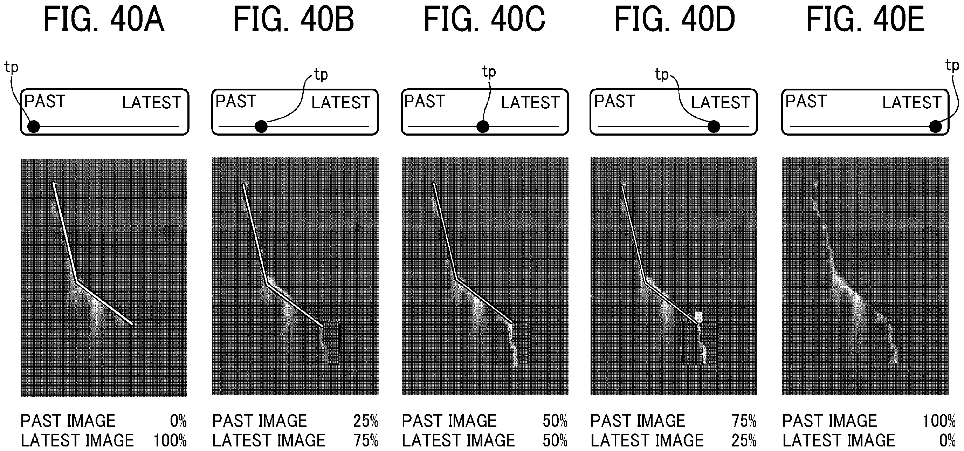

A relationship among (1) the position of the transparency point tp, (2) a developed-view image and a diagnostic-target image, and (3) the display transparency will be described with reference to FIGs. 40A to 40E. FIGs. 40A to 40E illustrate a relationship among the position of the transparency point tp, a developed-view image, a diagnostic-target image, and the display transparency.

First, as illustrated in FIG. 40A, when the transparency point tp is at the leftmost position, the display transparency of the set of past images including the past developed-view image and the corresponding past diagnostic-target image is 0%, and the display transparency of the latest developed-view image is 100%. An image with a display transparency of 0% is substantially invisible.

Then, as illustrated in FIG. 40B, when the transparency point tp is at an intermediate position between the leftmost position and the center position, the display transparency of the set of past images including the past developed-view image and the corresponding past diagnostic-target image is 25%, and the display transparency of the latest developed-view image is 75%. In this case, a crack, which does not appear in the past developed-view image, is visible in light color in the latest developed-view image. Note that the past diagnostic-target image is visible in slightly light color. Since the diagnostic target (in the illustrated example, the crack) in the past developed-view image appears in both the past developed-view image and the latest developed-view image, the diagnostic target is not displayed in light color even when the display transparency of either image set is changed.

Then, as illustrated in FIG. 40C, when the transparency point tp is at the center position (initial display state), the display transparency of the set of past images including the past developed-view image and the corresponding past diagnostic-target image is 50%, and the display transparency of the latest developed-view image is 50%. In this case, the crack, which does not appear in the past developed-view image, is more clearly visible in the latest developed-view image. Note that the past diagnostic-target image is visible in lighter color.

Then, as illustrated in FIG. 40D, when the transparency point tp is at an intermediate position between the center position and the rightmost position, the display transparency of the set of past images including the past developed-view image and the corresponding past diagnostic-target image is 75%, and the display transparency of the latest developed-view image is 25%. In this case, the crack, which does not appear in the past developed-view image, is more clearly visible in the latest developed-view image. Note that the past diagnostic-target image is visible in lighter color.

Then, as illustrated in FIG. 40E, when the transparency point tp is at the rightmost position, the display transparency of the set of past images including the past developed-view image and the corresponding past diagnostic-target image is 100%, and the display transparency of the latest developed-view image is 0%. While five levels of display transparency are illustrated in FIGs. 40A to 40E, any number of levels of display transparency, more than one level of display transparency, may be used.

As described above, as the transparency point tp is moved leftward, the opacity of the set of past images including the past developed-view image and the corresponding past diagnostic-target image (if drawn) gradually increases, with the display transparency thereof being 0% when the transparency point tp is at the leftmost position. In this case, the opacity of the set of latest images including the latest developed-view image and the latest diagnostic-target image (if drawn) gradually decreases in inverse proportion to the opacity of the set of past images, with the display transparency thereof being 100% when the transparency point tp is at the leftmost position. In contrast, as the transparency point tp is moved rightward, the opacity of the set of past images including the past developed-view image and the corresponding past diagnostic-target image gradually decreases, with the display transparency thereof being 100% when the transparency point tp is at the rightmost position. In this case, the opacity of the set of latest images including the latest developed-view image and the latest diagnostic-target image (if drawn) gradually increases in inverse proportion to the opacity of the set of past images, with the display transparency thereof being 0% when the transparency point tp is at the rightmost position. At the point in time of the initial display, the display transparency of the set of past images including the past developed-view image and the corresponding past diagnostic-target image is 50%, and the display transparency of the latest developed-view image is 50%.

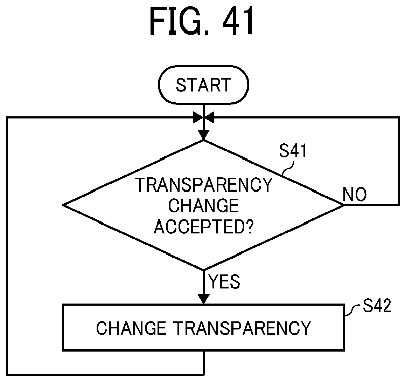

Referring back to FIG. 8, after the processing of step S32 described above, the process proceeds to step S24 described above. Next, a process for changing the display transparency in the processing of step S25 will be described with reference to FIGs. 41 to 44 FIG. 41 is a flowchart illustrating a process for changing the transparency on the diagnosis-location input screen SC5.

As illustrated in FIG. 41, the acceptance unit 32 waits for acceptance of the change in the position of the transparency point tp during the processing of step S25 (step S41: NO). If the acceptance unit 32 accepts a display transparency change made by changing the position of the transparency point tp (step S41: YES), the display control unit 34 changes the display transparency in the way illustrated in FIGs. 40A to 40E and as described above (step S42). Then, the acceptance unit 32 waits for acceptance of the next change in the position of the transparency point tp (step S41: NO).

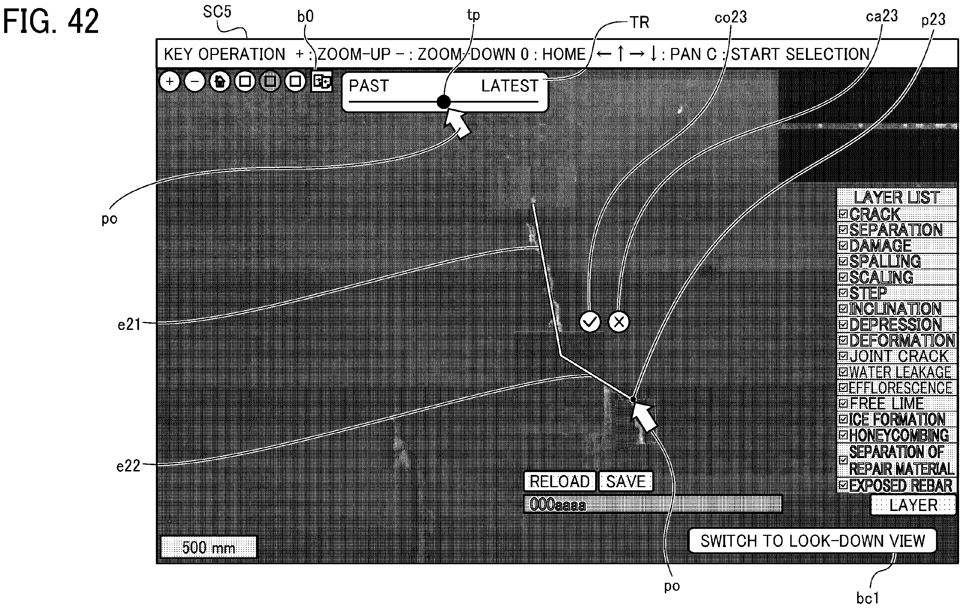

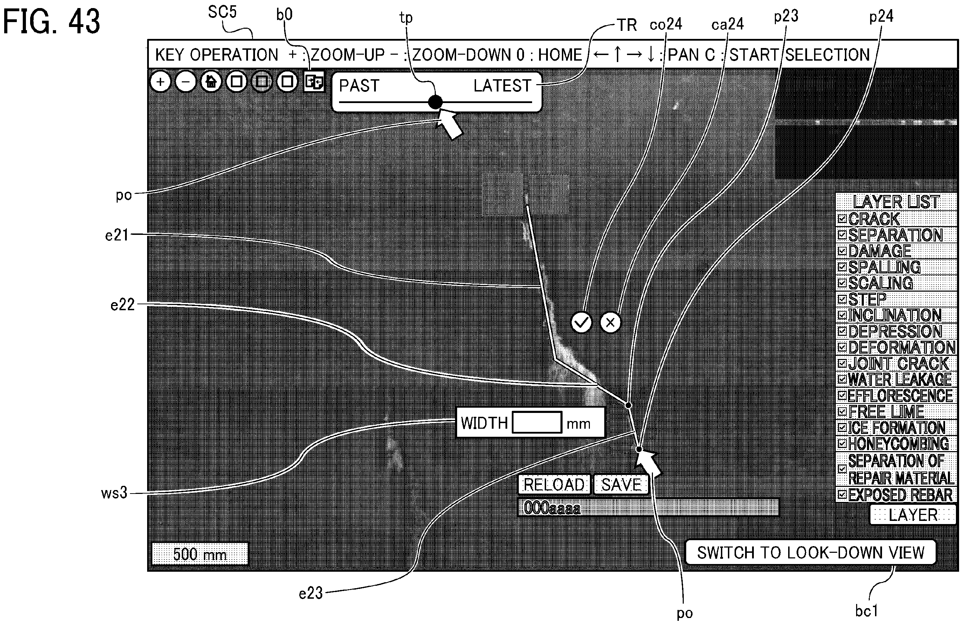

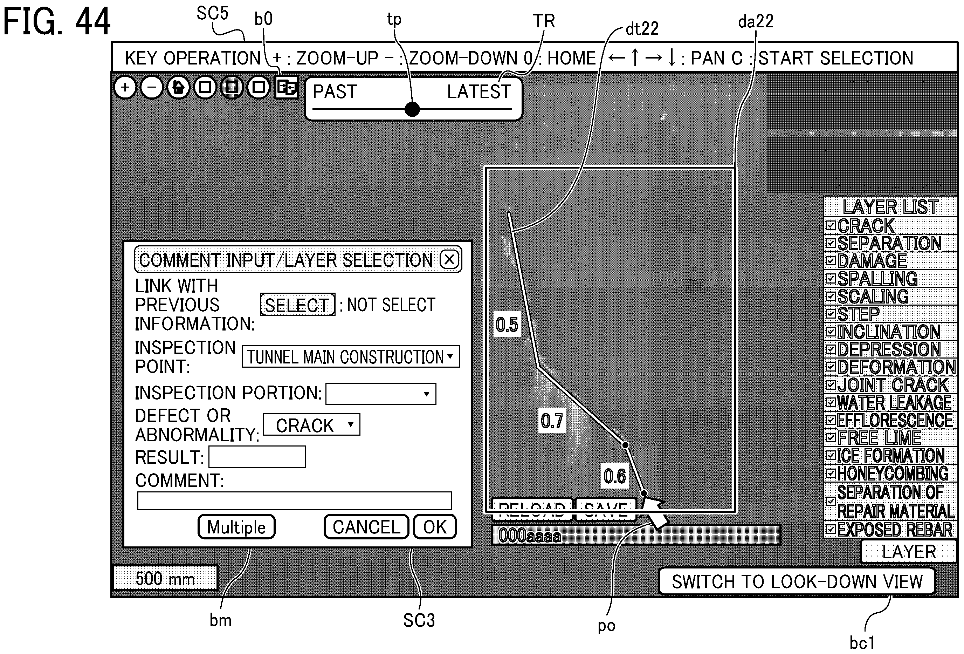

Next, a specific process for drawing a diagnostic-target image will be described with reference to FIGs. 42 to 44. FIGs. 42 to 44 illustrate an example screen for inputting a diagnostic-target image on the diagnosis-location input screen SC5 in the comparison mode. FIG. 42 corresponds to FIG. 22 in the single mode, FIG. 43 corresponds to FIG. 23 or 24 in the single mode, and FIG. 44 corresponds to FIG. 26 in the single mode.

First, as illustrated in FIG. 42, in response to the user specifying, with the pointer po, the end point p23 of the diagnostic-target element image e22 in the past developed-view image as a new start point p23 when the display transparency of the past developed-view image and the display transparency of the latest developed-view image are both 50%, the acceptance unit 32 accepts the input of the start point p23 of a diagnostic-target element image e23 that is initially presented in the latest developed-view image (step S201). Accordingly, the display control unit 34 displays the confirmation button co23 and the cancel button ca23 around the start point p23 (step S202).

Then, as illustrated in FIG. 43, in response to the user specifying, with the pointer po, an end point p24 of the diagnostic-target element image e23, the acceptance unit 32 accepts the input of the end point p24 of the diagnostic-target element image e23 (step S203). Accordingly, the display control unit 34 displays the diagnostic-target element image e23 and the width input screen ws3 between the start point p23 and the end point p24 and also displays a confirmation button co24 and a cancel button ca24 at or around the center of the diagnostic-target element image e23 (step S204). As described above, the user newly specifies the start point p23 and the end point p24 based on the past diagnostic-target element images e21 and e22 to draw the latest diagnostic-target element image e23. At this time, the user moves the transparency point tp in the transparency setting area TR to the left or right to find, in the latest developed-view image, a new crack or the like with respect to the past developed-view image.

The width input screen ws3 is displayed near the diagnostic-target element image between the start point p23 and the end point p24. In response to the user entering a numerical value in the width input screen ws3, the acceptance unit 32 accepts input of the entered numerical value. As illustrated in FIG. 43, the display control unit 34 displays the entered numerical value ("0.6").

Then, the determination unit 35 determines whether the acceptance unit 32 has accepted pressing of the confirmation button (step S205). If the determination unit 35 determines that the pressing of the confirmation button has not been accepted (step S205: NO), the process returns to step S203 described above.

As illustrated in FIG. 43, in response to the user pressing the confirmation button co24 with the pointer po, the acceptance unit 32 accepts the pressing of the confirmation button co24, and the determination unit 35 determines that the confirmation button co24 has been accepted (step S205: YES). Then, the determination unit 35 confirms a diagnostic-target image (straight line), and the display control unit 34 displays a confirmed diagnostic-target image dt22 as illustrated in FIG. 44 (step S206). The display control unit 34 further displays a rectangular diagnostic area da22 including the diagnostic-target image dt22 and also displays a diagnostic information input screen SC3 (step S207). In this case, the display control unit 34 masks a portion other than the diagnostic information input screen SC3 to make the diagnostic information input screen SC3 conspicuous. In response to the user pressing the "OK" button after selecting and inputting diagnostic information on the diagnostic information input screen SC3, the acceptance unit 32 accepts the selection and input of the diagnostic information (step S208).

As a result of the process described above, the drawing of the diagnostic-target image dt22 and the diagnostic area da22 and the selection and input of the diagnostic information in the diagnostic-target image (straight line) input mode for the comparison mode are completed. As described above, the user re-uses past images for the portions of the diagnostic-target element images e21 and e22 and draws the diagnostic-target element image e23, thereby drawing the diagnostic-target image dt22 including the diagnostic-target element images e21, e22, and e23.

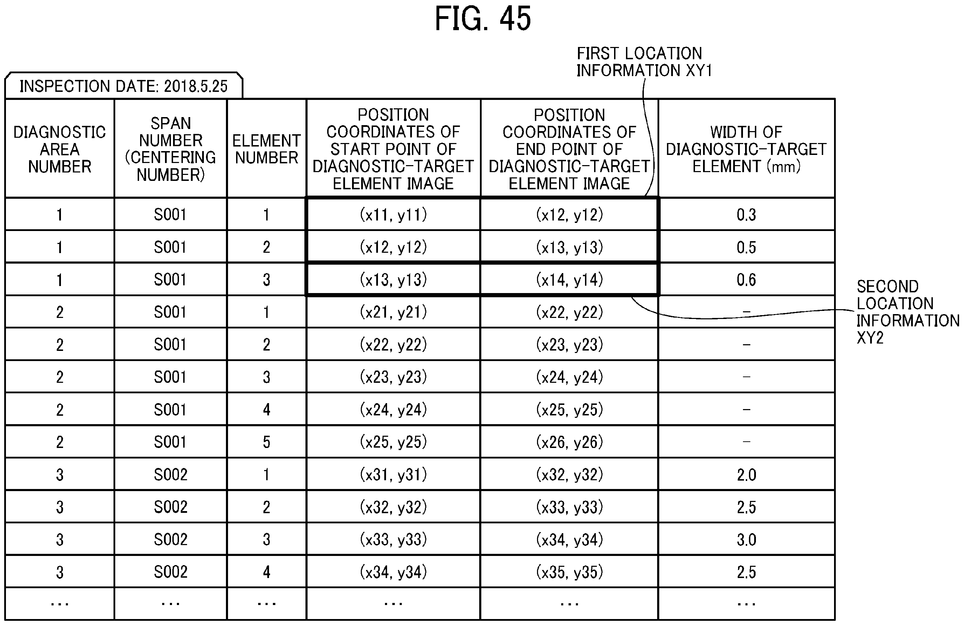

If the switch button b0 is pressed in step S23 and the comparison mode is selected, that is, if the comparison mode is set (step S26: YES), the storing and reading unit 39 adds new information to the diagnostic information and information on the diagnostic-target element associated with the past developed-view image selected in step S30 to generate a separate file and temporarily stores the separate file in the storage unit 3000 (step S33). For example, the diagnostic-target element images included in the diagnostic-target image illustrated in (b) of FIG. 39 are associated with the position coordinates (an example of the first location information XY1) indicated by the element numbers "1" and "2" with the diagnostic area number "1." In this case, the storing and reading unit 39 adds new information to the position coordinates to indicate the diagnostic-target element images included in the diagnostic-target image illustrated in (d) of FIG. 39. Specifically, as illustrated in FIG. 45, the storing and reading unit 39 adds together the position coordinates (an example of the first location information XY1) indicated by the element numbers "1" and "2" with the diagnostic area number "1" and position coordinates (an example of second location information XY2) indicated by the element number "3" of the same diagnostic area number "1" to generate a file, and temporarily stores the generated file separately from the information illustrated in FIG. 5. Then, the process illustrated in FIG. 8 ends.

As illustrated in (d) of FIG. 39, the display control unit 34 displays a past diagnostic-target image portion dp1 in accordance with the first location information XY1 and also displays a latest diagnostic-target element image portion dp2 in accordance with the second location information XY2.

As described above, according to the present embodiment, a user uses the drawing apparatus 3 to draw a diagnostic-target image indicating a diagnostic target on a developed-view image of a structure such as a tunnel and input, in the developed-view image, diagnostic information including a result of diagnosing the diagnostic target. Since the user directly draws the diagnostic-target image on the diagnostic target in the developed-view image and inputs the diagnostic information for the diagnostic target in the developed-view image, it is possible to reduce errors compared to the creation of a defect chart or the like with reference to many documents or screens as in the related art.

In addition, the drawing apparatus 3 stores the position coordinates of a diagnostic area and diagnostic information in association with each other. This allows the user to create a submission document indicating diagnostic information of a structure such as the tunnel 8 with less effort than in the related art.

In addition, a portion of the developed-view tunnel image 201 corresponding to a diagnostic area is used as a photographic image to be attached to the photograph report. Accordingly, unlike the related art, a defect photograph is not affixed to the photograph report, and is prevented from being affixed to the photograph report at a wrong position.

Further, as illustrated in FIGs. 33A and 33B, the display of the captured image 202, which is a portion of the developed-view tunnel image, is switched between a look-up view 222a illustrated in FIG. 33A, which is a view looking up from below, and a look-down view 222b illustrated in FIG. 33B, which is a view looking down from above. This allows the user to draw a diagnostic target or input diagnostic information in a developed-view tunnel image that the user prefers or is familiar with, thereby reducing errors. At the time of submission to the state government or any other organization, the drawing apparatus 3 outputs a look-down view. This makes the user less confused and prevents the user from making a submission error.

Further, as illustrated in FIG. 7, in a report according to the format issued by the state government or any other organization, a defect chart represents a "look-down view" of the tunnel viewed from outside the tunnel, and an attachment image to be attached to the photograph report is a "look-up view", which is a captured image of the inside of the tunnel from below. As a result, an inspector who creates a submission document may be confused. In addition, as described above, as illustrated in FIGs. 32A to 32C, some attachment images to be attached to the photograph report are flipped upside down. This may further make the inspector confused when creating the submission document. In the present embodiment, in contrast, the diagnosis management server 5 automatically creates the submission document, thereby providing an effect of preventing an error in creating the submission document.

In addition, the user re-uses past images for the portions of the diagnostic-target element images e21 and e22 and draws the diagnostic-target element image e23, thereby drawing the diagnostic-target image dt22 including the diagnostic-target element images e21, e22, and e23. This provides an effect of reducing time and effort in performing drawing on a defect portion in a developed-view image of a structure compared to existing methods.

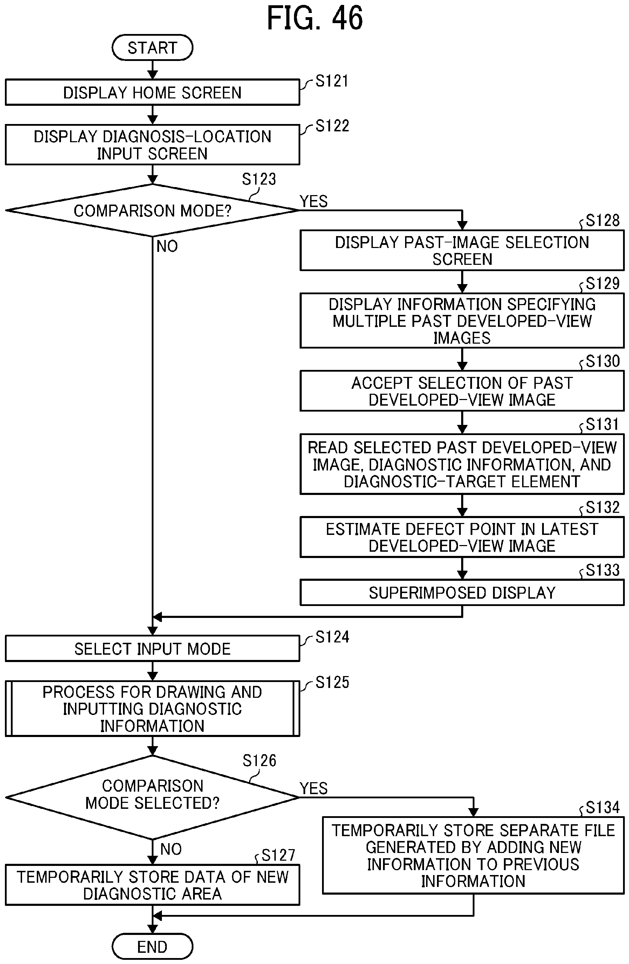

FIG. 46 is a flowchart illustrating an overview of a process for drawing and inputting diagnostic information according to a modification of the present embodiment.

The processing of steps S121 to S131 and S134 in the flowchart illustrated in FIG. 46 is similar to the processing of steps S21 to S31 and S33 in the flowchart illustrated in FIG. 8.

In step S132, the estimation unit 36 estimates, based on the latest developed-view image, a defect location in the tunnel indicated by the latest developed-view image by using the learning model 3001.

In step S133, as in step S32 of the flowchart illustrated in FIG. 8, the display control unit 34 displays the diagnosis-location input screen SC5 on which a diagnostic target in the latest developed-view image is superimposed on a diagnostic target in the past developed-view image and the corresponding past diagnostic-target image. In addition, the display control unit 34 also displays an estimated defect image indicating the defect location estimated by the estimation unit 36 in step S132 such that the estimated defect image is superimposed on the diagnostic target in the past developed-view image and the corresponding past diagnostic-target image.

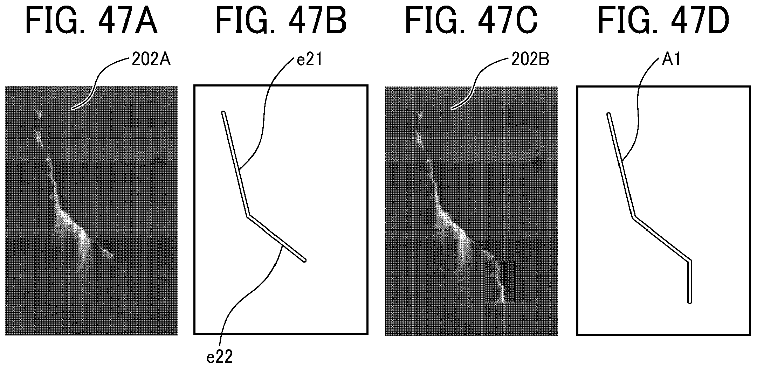

FIGs. 47A to 47D illustrate images displayed in a superimposed manner according to the modification illustrated in FIG. 46.

FIG. 47A illustrates a diagnostic target 202A in the past developed-view image. FIG. 47B illustrates the past diagnostic-target element images e21 and e22. FIG. 47C illustrates a diagnostic target 202B in the latest developed-view image. FIG. 47D illustrates an estimated defect image A1 in the diagnostic target in the latest developed-view image.

The diagnostic target 202A in the past developed-view image is an example of a first captured image. The diagnostic-target element images e21 and e22 are examples of a first drawn defect image. The diagnostic target 202B in the latest developed-view image is an example of a second captured image.

The generation unit 37 generates a display image in which the images illustrated in FIGs. 47A to 47D are displayed in a superimposed manner. The display control unit 34 causes the display 308 to display the display image generated by the generation unit 37.

Accordingly, comparing the past diagnostic-target element images e21 and e22 with the estimated defect image A1 facilitates estimation of a defect point generated in the tunnel during a period of time between a first time indicated by the past developed-view image and a second time indicated by the latest developed-view image.

The generation unit 37 generates a display image including at least the past diagnostic-target element images e21 and e22 illustrated in FIG. 47B and the estimated defect image A1 illustrated in FIG. 47D. In one embodiment, the generation unit 37 may generate a display image in which the past diagnostic-target element images e21 and e22 illustrated in FIG. 47B and the estimated defect image A1 illustrated in FIG. 47D are displayed in a superimposed manner. In another embodiment, the generation unit 37 may generate a display image in which the past diagnostic-target element images e21 and e22 illustrated in FIG. 47B and the estimated defect image A1 illustrated in FIG. 47D are selectively or simultaneously displayed.

In one embodiment, the generation unit 37 may generate a display image in which the diagnostic target 202B in the latest developed-view image illustrated in FIG. 47C is displayed to be superimposed on the estimated defect image A1 illustrated in FIG. 47D. In another embodiment, the generation unit 37 may generate a display image in which the diagnostic target 202B in the latest developed-view image illustrated in FIG. 47C and the estimated defect image A1 illustrated in FIG. 47D are selectively or simultaneously displayed.

In one embodiment, the generation unit 37 may generate a display image in which the diagnostic target 202A in the past developed-view image illustrated in FIG. 47A is displayed to be superimposed on the diagnostic target 202B in the latest developed-view image illustrated in FIG. 47C. In another embodiment, the generation unit 37 may generate a display image in which the diagnostic target 202A in the past developed-view image illustrated in FIG. 47A and the diagnostic target 202B in the latest developed-view image illustrated in FIG. 47C are selectively or simultaneously displayed.

In one embodiment, the generation unit 37 may generate a display image in which the past diagnostic-target element images e21 and e22 illustrated in FIG. 47B are displayed to be superimposed on the diagnostic target 202B in the latest developed-view image illustrated in FIG. 47C. In another embodiment, the generation unit 37 may generate a display image in which the past diagnostic-target element images e21 and e22 illustrated in FIG. 47B and the diagnostic target 202B in the latest developed-view image illustrated in FIG. 47C are selectively or simultaneously displayed.

In the process described above, the estimation unit 56 of the diagnosis management server 5, instead of the estimation unit 36, may estimate, based on the latest developed-view image, a defect location in the tunnel indicated by the latest developed-view image by using the learning model 5003, and the generation unit 57 of the diagnosis management server 5, instead of the generation unit 37, may generate the various display images described above.

In this case, the transmitting and receiving unit 51 transmits a display image generated by the generation unit 57 to the drawing apparatus 3. The transmitting and receiving unit 31 of the drawing apparatus 3 receives the display image transmitted from the diagnosis management server 5, and the display control unit 34 causes the display 308 to display the display image received by the transmitting and receiving unit 31.

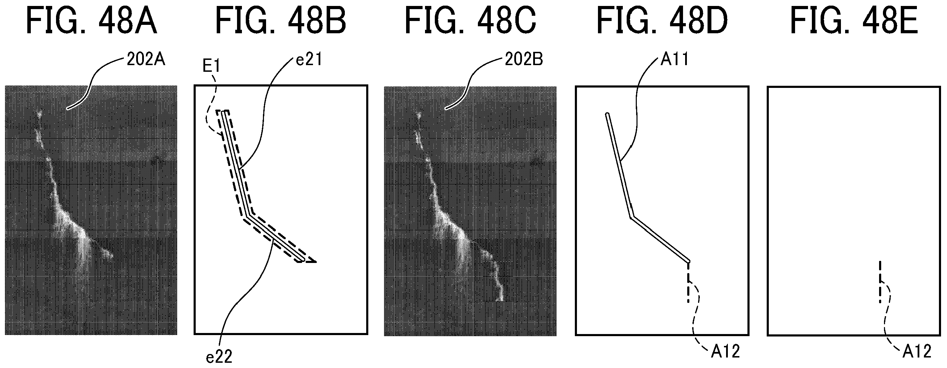

FIGs. 48A to 48E illustrate a state in which the estimated defect image A1 has been selected in FIG. 47D.

In response to the acceptance unit 32 accepting an operation for selecting the estimated defect image A1 in the state illustrated in FIG. 47D, the determination unit 35 determines whether any past diagnostic-target element overlaps in position with the estimated defect image A1. If a past diagnostic-target element overlaps in position with the estimated defect image A1, as illustrated in FIG. 48B, the generation unit 37 generates a display image in which a highlight image E1 is displayed around the past diagnostic-target element images e21 and e22 that overlap in position with the estimated defect image A1.

The highlight image E1 is an example of a discrimination image for displaying the past diagnostic-target element images e21 and e22 distinguishably from other diagnostic-target element images.

The generation unit 37 may generate a display image for displaying the highlight image E1 in response to the acceptance unit 32 accepting an operation for selecting the past diagnostic-target element images e22 and e21.

Alternatively, if a past diagnostic-target element overlaps in position with the estimated defect image A1, as illustrated in FIG. 48D, the generation unit 37 generates a display image in which a first portion A11 and a second portion A12 are displayed distinguishably from each other. The first portion A11 is a portion of the estimated defect image A1 that overlaps in position with the past diagnostic-target element images e21 and e22. The second portion A12 is a portion of the estimated defect image A1 that does not overlap in position with the past diagnostic-target element images e21 and e22.

Alternatively, if a past diagnostic-target element overlaps in position with the estimated defect image A1, as illustrated in FIG. 48E, the generation unit 37 generates a display image in which the first portion A11, which is a portion of the estimated defect image A1 that overlaps in position with the past diagnostic-target element images e21 and e22, is made invisible and the second portion A12, which is a portion of the estimated defect image A1 that does not overlap in position with the past diagnostic-target element images e21 and e22, is made visible.

Accordingly, checking the second portion A12, which is a portion of the estimated defect image A1 that does not overlap in position with the past diagnostic-target element images e21 and e22, facilitates estimation of a defect point generated during the period of time between the first time and the second time.

The second portion A12 illustrated in FIG. 48E may be obtained by the estimation unit 36 estimating, based on the diagnostic target 202A in the past developed-view image and the diagnostic target 202B in the latest developed-view image, a difference between the diagnostic target 202A in the past developed-view image and the diagnostic target 202B in the latest developed-view image as a defect location.

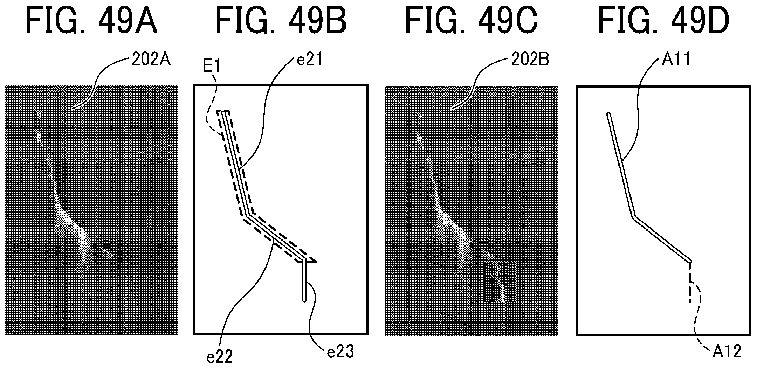

FIGs. 49A to 49D illustrate a state in which the diagnostic-target element image e23 is drawn in FIGs. 48A to 48D.

In the state illustrated in FIG. 48B, the acceptance unit 32 accepts an input for drawing the latest diagnostic-target element image e23 for the past diagnostic-target element images e21 and e22 illustrated in FIG. 47B, which are displayed on the display 308. Then, the storing and reading unit 39 stores, in the storage unit 3000, the diagnostic-target element image e23 in association with the location of the diagnostic-target element image e23 relative to the locations of the past diagnostic-target element images e21 and e22a in the display image. The diagnostic-target element image e23 is an example of a second drawn defect image.

Accordingly, comparing the past diagnostic-target element images e21 and e22 with the estimated defect image A1 facilitates estimation of a defect point generated during the period of time between the first time and the second time, and also allows appropriate drawing of the diagnostic-target element image e23.

The generation unit 37 may generate, as the diagnostic-target element image e23, the second portion A12 illustrated in FIG. 49D, which does not overlap in position with the past diagnostic-target element images e21 and e22 in the estimated defect image A1. The acceptance unit 32 may accept an input for correcting the diagnostic-target element image e23 generated by the generation unit 37.

Accordingly, the second portion A12 illustrated in FIG. 49D is initially set as the diagnostic-target element image e23. Thus, the diagnostic-target element image e23 can be easily drawn.

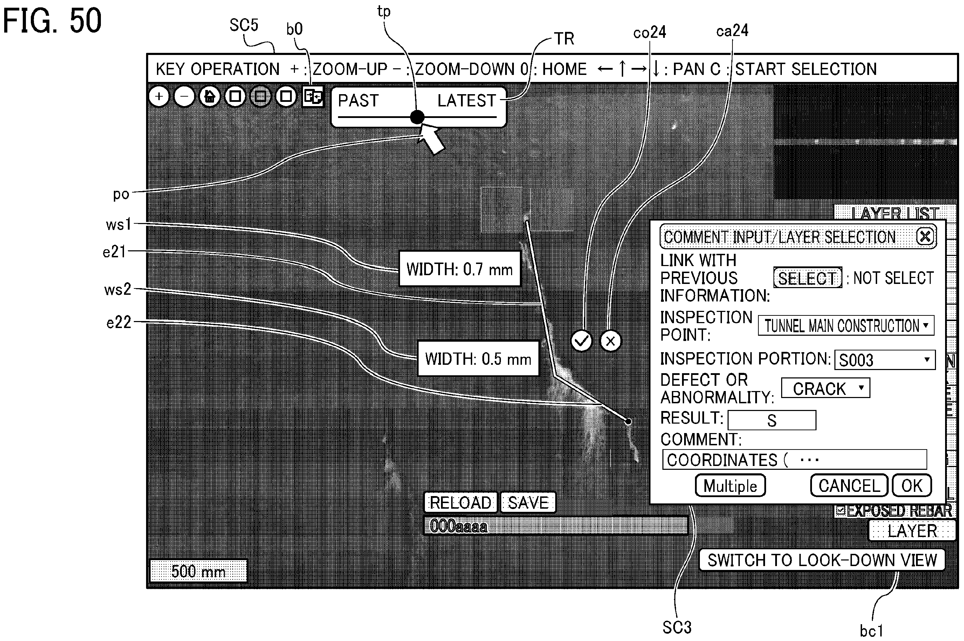

FIG. 50 illustrates an example screen before a diagnostic-target image is input on the diagnosis-location input screen SC5 in the comparison mode corresponding to FIGs. 48A to 48E.

In FIG. 50, the display control unit 34 causes the display 308 to display a display image including the past diagnostic-target element images e21 and e22. The past diagnostic-target element images e21 and e22 are displayed to be superimposed on the diagnostic target 202A in the past developed-view image illustrated in FIG. 48A and the diagnostic target 202B in the latest developed-view image illustrated in FIG. 48C.

In one example, the estimated defect image A11 illustrated in FIG. 48D is selectively displayed on the display image illustrated in FIG. 50 or is simultaneously displayed on the display image illustrated in FIG. 50.

In FIG. 50, the past diagnostic-target element images e21 and e22 are selected and highlighted. In accordance with the selection of the estimated defect image A11 illustrated in FIG. 48D, the past diagnostic-target element images e21 and e22 are selected as a portion overlapping the estimated defect image A11.

The display control unit 34 causes the display 308 to display the numerical values entered on the width input screens ws1 and ws2, namely, 0.7 mm and 0.5 mm, and the value entered on the diagnostic information input screen SC3 in correctable manner in association with the past diagnostic-target element images e21 and e22. The numerical values entered on the width input screens ws1 and ws2, namely, 0.7 mm and 0.5 mm, and the value entered on the diagnostic information input screen SC3 are values stored in the diagnostic-target element management DB 5002 in association with the past diagnostic-target element images e21 and e22.

As described above, the past diagnostic-target element images e21 and e22 are displayed to be superimposed on the diagnostic target 202A in the past developed-view image illustrated in FIG. 48A and the diagnostic target 202B in the latest developed-view image illustrated in FIG. 48C. This allows the user to check the past diagnostic-target element images e21 and e22 by comparing the diagnostic target 202A in the past developed-view image with the diagnostic target 202B in the latest developed-view image.

As a result, in one embodiment, for example, it is determined that the widths of the diagnostic-target elements for the past diagnostic-target element images e21 and e22 are larger than the numerical values entered on the width input screen ws1 and ws2, namely, 0.7 mm and 0.5 mm.

In this case, the user enters new numerical values on the width input screens ws1 and ws2 and operates the confirmation button co24. Then, the acceptance unit 32 accepts an input for correcting the numerical values entered on the width input screens ws1 and ws2, and the storing and reading unit 39 stores the past diagnostic-target element images e21 and e22 and the corrected numerical values on the width input screens ws1 and ws2 in the storage unit 3000 in association with each other.

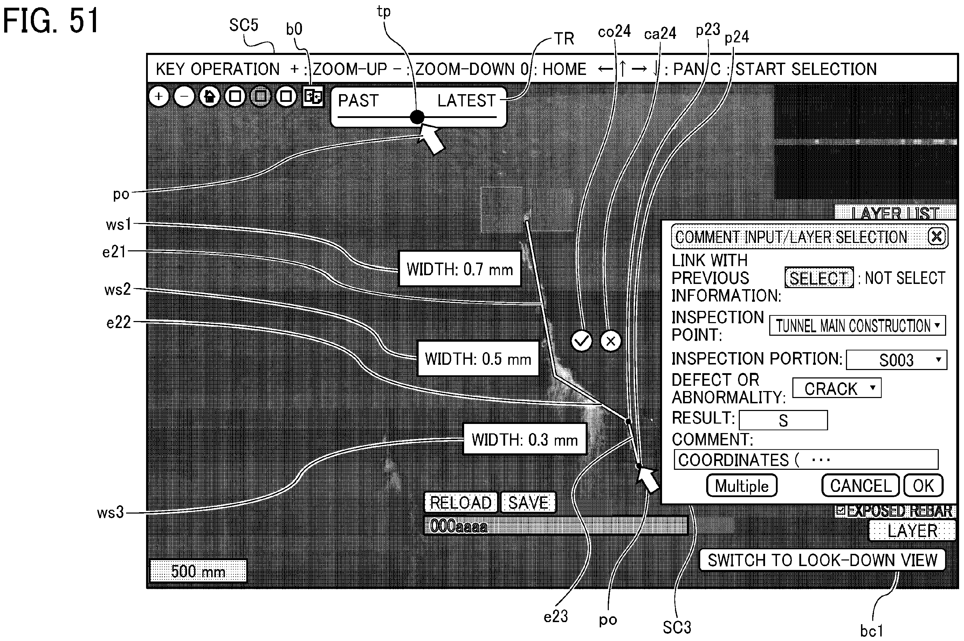

FIG. 51 illustrates an example screen for inputting a diagnostic-target image on the diagnosis-location input screen SC5 in the comparison mode corresponding to FIGs. 49A to 49D.

In FIG. 51, the diagnostic-target element image e23 are drawn in the state illustrated in FIG. 50.

As described with reference to FIG. 43, in response to the user specifying, with the pointer po, the end point p23 of the diagnostic-target element image e22 in the past developed-view image as a new start point p23, the acceptance unit 32 accepts the input of the start point p23 of the initial diagnostic-target element image e23 in the latest developed-view image.

Accordingly, the display control unit 34 displays a confirmation button co23 and a cancel button ca23 around the start point p23.

Then, in response to the user specifying, with the pointer po, an end point p24 of the diagnostic-target element image e23, the acceptance unit 32 accepts the input of the end point p24 of the diagnostic-target element image e23. Accordingly, the display control unit 34 displays the diagnostic-target element image e23 and the width input screen ws3 between the start point p23 and the end point p24 and also displays a confirmation button co24 and a cancel button ca24 at or around the center of the diagnostic-target element image e23.

The width input screen ws3 is displayed between the start point p23 and the end point p24 near the diagnostic-target element image e23, and the numerical value "0.6" is estimated and displayed on the width input screen ws3. In response to the user entering a corrected numerical value on the width input screen ws3, the acceptance unit 32 accepts input of the entered numerical value.

In one embodiment, the user refers the numerical values entered on the width input screens ws1 and ws2, namely, 0.7 mm and 0.5 mm, for the selected past diagnostic-target element images e21 and e22 to easily enter a numerical value on the width input screen ws3 for the diagnostic-target element image e23.

The numerical values of the width entered on the width input screens ws1 and ws2 are examples of first additional information for the first drawn defect image, and the numerical value of the width entered on the width input screen ws3 is an example of second additional information for the second drawn defect image.

Further, the estimation unit 36 estimates the numerical value "0.6" on the width input screen ws3, based on the past diagnostic-target element images e21 and e22 and the numerical values entered on the width input screens ws1 and ws2, namely, 0.7 mm and 0.5 mm, which are stored in the diagnostic-target element management DB 5002, and also based on the diagnostic-target element image e23. The display control unit 34 displays the width input screen ws3 on which the numerical value "0.6", which is estimated by the estimation unit 36, is initially set.

In response to the user entering a new numerical value on the width input screen ws3 and operating the confirmation button co24, the acceptance unit 32 accepts an input for correcting the numerical value "0.6" on the width input screen ws3, which is estimated by the estimation unit 36, and the storing and reading unit 39 stores the diagnostic-target element image e23, the location of the diagnostic-target element image e23 relative to the locations of the diagnostic-target element images e21 and e22, and the corrected numerical value on the width input screen ws3 in the storage unit 3000 in association with each other.

In one embodiment, the user refers to the numerical value "0.6" estimated by the estimation unit 36 to easily enter a numerical value on the width input screen ws3.

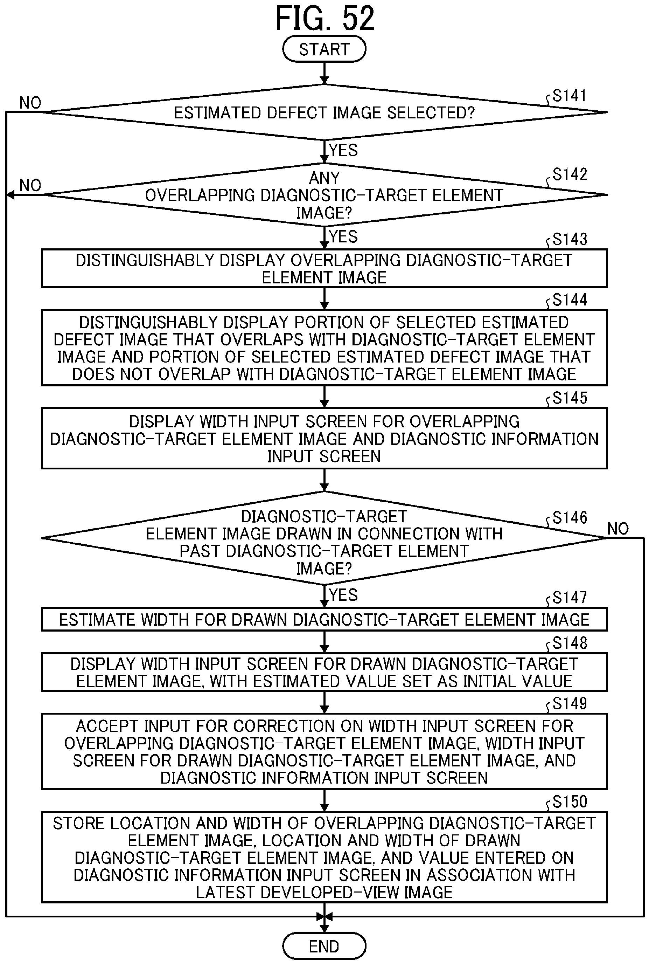

FIG. 52 is a flowchart illustrating an input and output process according to the modification illustrated in FIG. 46.

The determination unit 35 determines whether the acceptance unit 32 has accepted an operation for selecting the estimated defect image A1 (step S141). The determination unit 35 determines whether any past diagnostic-target element overlaps in position with the estimated defect image A1 (step S142).

If it is determined in step S142 that a past diagnostic-target element overlaps in position with the estimated defect image A1, as illustrated in FIG. 48B, the generation unit 37 generates a display image in which the highlight image E1 is displayed around the past diagnostic-target element images e21 and e22 that overlap in position with the estimated defect image A1, and the display control unit 34 causes the display 308 to display the display image (step S143).

Further, as illustrated in FIG. 48D, the generation unit 37 generates a display image in which the first portion A11, which is a portion of the estimated defect image A1 that overlaps in position with the past diagnostic-target element images e21 and e22, and the second portion A12, which is a portion of the estimated defect image A1 that does not overlap in position with the past diagnostic-target element images e21 and e22, are displayed distinguishably from each other, and the display control unit 34 causes the display 308 to display the display image (step S144).

The generation unit 37 generates a display image in which the numerical values entered on the width input screens ws1 and ws2, which are stored in the diagnostic-target element management DB 5002 in association with the past diagnostic-target element images e21 and e22 that overlap in position with the estimated defect image A1, and the value entered on the diagnostic information input screen SC3 are displayed in association with the past diagnostic-target element images e21 and e22, and the display control unit 34 causes the display 308 to display the display image (step S145).

As described with reference to FIG. 51, the determination unit 35 determines whether the acceptance unit 32 has accepted an input for drawing the diagnostic-target element image e23 in connection with the past diagnostic-target element images e21 and e22 (step S146).

If it is determined in step S146 that the acceptance unit 32 has accepted the input, the estimation unit 36 estimates and initially sets a value on the width input screen ws3, based on the past diagnostic-target element images e21 and e22, the values of the widths entered on the width input screens ws1 and ws2, and the diagnostic-target element image e23 (step S147).

The generation unit 37 generates a display image in which the value estimated by the estimation unit 36 in step S147 is initially set and displayed on the width input screen ws3, and the display control unit 34 causes the display 308 to display the display image (step S148).

The acceptance unit 32 accepts an input for performing correction on the width input screens ws1 and ws2 and the diagnostic information input screen SC3 displayed in step S145, and an input for performing correction on the width input screen ws3 displayed in step S148 (step S149).

The storing and reading unit 39 stores the locations of the diagnostic-target element images e21 and e22, the values of the width entered on the width input screens ws 1 and ws2, the location of the diagnostic-target element image e23, the value of the width entered on the width input screen ws3, and the value entered on the diagnostic information input screen SC3 in the storage unit 3000 in association with the latest developed-view image (step S150).

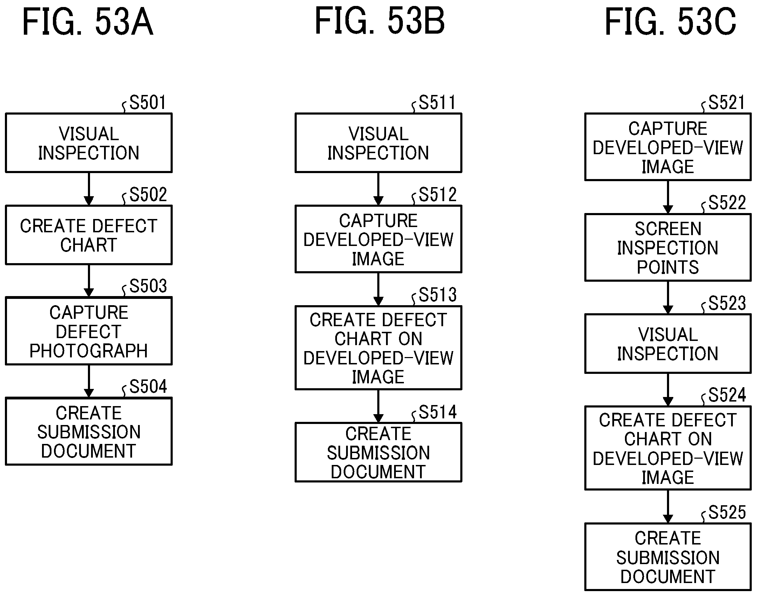

FIGs. 53A to 53C illustrate inspection processes. FIG. 53A illustrates an existing inspection process. FIG. 53B illustrates an inspection process according to the present embodiment. FIG. 53C illustrates an inspection process according to a modification of the present embodiment.

In the existing inspection process illustrated in FIG. 53A, an inspector visually inspects a tunnel and marks a defect point with chalk (step S501), creates a defect chart representing a defect portion of the tunnel (step S502), captures a defect photograph indicating the defect portion of the tunnel (step S503), and creates a submission document based on the defect chart and the defect photograph (step S504).

In the inspection process according to the present embodiment illustrated in FIG. 53B, an inspector visually inspects a tunnel and marks a defect point with chalk (step S511), captures a developed-view image of the tunnel (step S512), creates a defect chart on the developed-view image (step S513), and creates a submission document based on the defect chart and the developed-view image (step S514).

The inspection process according to the present embodiment facilitates creation of a defect chart and a submission document, compared to the existing inspection process in which the creation of a defect chart and the capturing of a defect photograph are performed separately.

In the inspection process according to a modification of the present embodiment illustrated in FIG. 53C, an inspector captures a developed-view image of a tunnel (step S521), screens inspection points in advance based on the developed-view image (step S522), visually inspects the tunnel (step S523), creates a defect chart on the developed-view image (step S524), and creates a submission document based on the defect chart and the developed-view image (step S525).

The inspection process according to the modification of the present embodiment reduces the number of operations to be performed to mark defect points with chalk and provides efficient visual inspection of the tunnel, compared to the inspection process illustrated in FIG. 53B.

More specifically, the processing of steps S141 to S145 of the process illustrated in FIG. 52 is performed in step S522 illustrated in FIG. 53C. This allows estimation of a defect point in advance and provides efficient visual inspection of the tunnel.

### Supplemental Remarks

In the embodiment described above, the diagnostic area da11 includes the diagnostic-target image dt11. In another embodiment, the diagnostic area da11 may be identical to the diagnostic-target image dt11.

The submission document may be created by the drawing apparatus 3, instead of the diagnosis management server 5. In this case, in one embodiment, the drawing apparatus 3 creates a submission document (including a defect chart, a photograph report, and a tunnel inspection result summary table) based on the data input in step S1 (the data transmitted in step S8) and the data received in step S6.

In the embodiment described above, furthermore, the acceptance unit 32 accepts the process for drawing a diagnostic target and inputting diagnostic information from a user, by way of example but not limitation. For example, the drawing apparatus 3 or the diagnosis management server 5 may be installed with artificial intelligence (AI), and the AI may search for a target area in a developed-view image and automatically select a diagnostic target or measure the width of the diagnostic target. The selection of a diagnostic target is performed by a selection unit implemented by the AI. The measurement of the width of the diagnostic target is performed by a measurement unit implemented by the AI.

In the embodiment described above, a developed-view image of a structure has been described. In another embodiment, the structure is a planar structure such as a wall or a fence, and an overall image representing the entire structure, instead of a developed-view image, may be used.

### First Aspect

In a first aspect, the drawing apparatus 3, which is an example of an information processing apparatus according to embodiment of the present disclosure, includes the estimation unit 36 and the generation unit 37. The estimation unit 36 estimates, based on the diagnostic target 202B in the latest developed-view image, which is an example of a second captured image of a structure at a second time later than a first time, a second defect location in the structure at the second time. The generation unit 37 generates a display image including the diagnostic-target element images e21 and e22, which are examples of a first drawn defect image that is a drawn image indicating a first defect location in the structure at the first time, and the estimated defect image A1 indicating the second defect location estimated by the estimation unit 36.

With this configuration, comparing the first drawn defect image with the estimated defect image A1 facilitates estimation of a defect point generated in the structure during the period of time between the first time and the second time.

### Second Aspect

According to a second aspect, in the information processing apparatus of the first aspect, the generation unit 37 generates the display image in which the first portion A11, which is a portion of the estimated defect image A1 that overlaps in position with the first drawn defect image, and the second portion A12, which is a portion of the estimated defect image A1 that does not overlap in position with the first drawn defect image, are displayed distinguishably from each other.

With this configuration, checking the second portion A12, which is a portion of the estimated defect image A1 that does not overlap in position with the first drawn defect image, facilitates estimation of a defect point generated in the structure during the period of time between the first time and the second time.

### Third Aspect

According to a third aspect, in the information processing apparatus of the first aspect, the generation unit 37 generates the display image in which the first portion A11, which is a portion of the estimated defect image A1 that overlaps in position with the first drawn defect image, is made invisible and the second portion A12, which is a portion of the estimated defect image A1 that does not overlap in position with the first drawn defect image, is made visible.

With this configuration, checking the second portion A12, which is a portion of the estimated defect image A1 that does not overlap in position with the first drawn defect image, facilitates estimation of a defect point generated during the period of time between the first time and the second time.

### Fourth Aspect

According to a fourth aspect, in the information processing apparatus of any one of the first to third aspects, the generation unit 37 generates the display image in which the first drawn defect image and the estimated defect image A1 are displayed in a superimposed manner, selectively, or simultaneously.

This configuration facilitates comparison between the diagnostic-target element images e21 and e22 and the estimated defect image A1.

### Fifth Aspect

According to a fifth aspect, in the information processing apparatus of any one of the first to fourth aspects, the generation unit 37 generates the display image in which the estimated defect image A1 and the second captured image are displayed in a superimposed manner, selectively, or simultaneously.

With this configuration, comparing the first drawn defect image with the estimated defect image A1 and also comparing the first drawn defect image and the second captured image facilitate estimation of a defect point generated during the period of time between the first time and the second time.

### Sixth Aspect

According to a sixth aspect, in the information processing apparatus of any one of the first to fifth aspects, the generation unit 37 generates the display image in which the second captured image and the diagnostic target 202A in the past developed-view image, which is an example of a first captured image of the structure at the first time, are further displayed in a superimposed manner, selectively, or simultaneously.

With this configuration, comparing the first drawn defect image with the estimated defect image A1 and also comparing the first captured image and the second captured image facilitate estimation of a defect point generated during the period of time between the first time and the second time.

### Seventh Aspect

According to a seventh aspect, in the information processing apparatus of any one of the first to sixth aspects, the estimation unit 36 estimates the difference A12 from the first defect location as the second defect location, based on the second captured image and a first captured image of the structure at the first time.

With this configuration, checking the second portion A12, which is a portion of the estimated defect image A1 that does not overlap in position with the first drawn defect image, facilitates estimation of a defect point generated during the period of time between the first time and the second time.

### Eight Aspect

According to an eighth aspect, the information processing apparatus of any one of the first to seventh aspects further includes the display control unit 34 to control the display 308 to display the display image.

### Ninth Aspect

According to a ninth aspect, the information processing apparatus of the eighth aspect further includes the acceptance unit 32 and the storing and reading unit 39, which is an example of storage control means. The acceptance unit 32 accepts an input for drawing the diagnostic-target element image e23, which is an example of a second drawn defect image, on the display image displayed on the display 308. The storing and reading unit 39 stores the second drawn defect image and a position of the second drawn defect image relative to a position of the first drawn defect image in the display image in the storage unit 3000 in association with each other.

With this configuration, comparing the first drawn defect image with the estimated defect image A1 facilitates estimation of a defect point generated during the period of time between the first time and the second time, and also allows appropriate drawing of the second drawn defect image.

### Tenth Aspect

According to a tenth aspect, in the information processing apparatus of the ninth aspect, the generation unit 37 generates the second portion A12 as the second drawn defect image among the first portion A11, which is a portion of the estimated defect image that overlaps in position with the first drawn defect image, and the second portion A12, which is a portion of the estimated defect image that does not overlap in position with the first drawn defect image. The acceptance unit 32 accepts an input for correcting the second drawn defect image generated by the generation unit 37.

With this configuration, the second portion A12, which is a portion of the estimated defect image A1 that does not overlap in position with the first drawn defect image, is initially set as the second drawn defect image, which facilitates drawing of the second drawn defect image.

### Eleventh Aspect

In an eleventh aspect, an information processing method executed by an information processing apparatus according to an embodiment of the present disclosure includes estimating, based on a second captured image of a structure at a second time later than a first time, a second defect location in the structure at the second time; and generating a display image including a first drawn defect image that is a drawn image indicating a first defect location in the structure at the first time, and the estimated defect image A1 indicating the estimated second defect location.

### Twelfth Aspect

In a twelfth aspect, a program according to an embodiment of the present disclosure causes a computer to execute the information processing method of the eleventh aspect.

### Thirteenth Aspect

In a thirteenth aspect, the diagnostic system 1, which is an example of an information processing system according to an embodiment of the present disclosure, includes the diagnosis management server 5, which is an information processing apparatus, and the drawing apparatus 3, which is an example of a communication terminal to communicate with the diagnosis management server 5. The diagnosis management server 5 includes the estimation unit 56, the generation unit 57, and the transmitting and receiving unit 51. The estimation unit 56 estimates, based on a second captured image of a structure at a second time later than a first time, a second defect location in the structure at the second time. The generation unit 57 generates a display image including a first drawn defect image that is a drawn image indicating a first defect location in the structure at the first time, and the estimated defect image A1 indicating the second defect location estimated by the estimation unit 36. The transmitting and receiving unit 51 transmits the display image to the drawing apparatus 3. The drawing apparatus 3 includes the transmitting and receiving unit 31 and the display control unit 34. The transmitting and receiving unit 31 receives the display image from the diagnosis management server 5. The display control unit 34 controls the display 308 to display the display image.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. An information processing apparatus comprising:
estimation means (36, 56) for estimating a second defect location in a structure at a second time, based on a second captured image of the structure at the second time later than a first time; and
generation means (37, 57) for generating a display image including a first drawn defect image and an estimated defect image, the first drawn defect image being a drawn image indicating a first defect location in the structure at the first time, the estimated defect image indicating the second defect location estimated by the estimation means (36, 56).

2. The information processing apparatus according to claim 1, wherein
the generation means (37, 57) is configured to generate the display image in which a first portion of the estimated defect image and a second portion of the estimated defect image are displayed distinguishably from each other, the first portion being a portion that overlaps in position with the first drawn defect image, the second portion being a portion that does not overlap in position with the first drawn defect image.

3. The information processing apparatus according to claim 1, wherein
the generation means (37, 57) is configured to generate the display image in which a first portion of the estimated defect image is made invisible and a second portion of the estimated defect image is made visible, the first portion being a portion that overlaps in position with the first drawn defect image, the second portion being a portion that does not overlap in position with the first drawn defect image.

4. The information processing apparatus according to any one of claims 1 to 3, wherein
the generation means (37, 57) is configured to generate the display image in which the first drawn defect image and the estimated defect image are displayed in a superimposed manner, selectively, or simultaneously.

5. The information processing apparatus according to any one of claims 1 to 4, wherein
the generation means (37, 57) is configured to generate the display image in which the estimated defect image and the second captured image are displayed in a superimposed manner, selectively, or simultaneously.

6. The information processing apparatus according to any one of claims 1 to 5, wherein
the generation means (37, 57) is configured to generate the display image in which the second captured image and a first captured image of the structure at the first time are further displayed in a superimposed manner, selectively, or simultaneously.

7. The information processing apparatus according to any one of claims 1 to 6, wherein
the estimation means (36, 56) is configured to estimate a difference from the first defect location as the second defect location, based on the second captured image and a first captured image of the structure at the first time.

8. The information processing apparatus according to any one of claims 1 to 7, further comprising display control means (34) for controlling a display unit to display the display image.

9. The information processing apparatus according to claim 8, further comprising:
acceptance means (32) for accepting an input for drawing a second drawn defect image on the display image displayed on the display unit; and
storage control means (39) for storing the second drawn defect image and a position of the second drawn defect image relative to a position of the first drawn defect image in the display image in storage means in association with each other.

10. The information processing apparatus according to claim 9, wherein
the generation means (37, 57) is configured to generate, among a first portion of the estimated defect image and a second portion of the estimated defect image, the second portion as the second drawn defect image, the first portion being a portion that overlaps in position with the first drawn defect image, the second portion being a portion that does not overlap in position with the first drawn defect image, and
the acceptance means (32) is configured to accept an input for correcting the second drawn defect image generated by the generation means (37, 57).

11. An information processing method performed by an information processing apparatus, the information processing method comprising:
estimating (S132) a second defect location in a structure at a second time, based on a second captured image of the structure at the second time later than a first time; and
generating (S133) a display image including a first drawn defect image and an estimated defect image, the first drawn defect image being a drawn image indicating a first defect location in the structure at the first time, the estimated defect image indicating the estimated second defect location.

12. Carrier means carrying computer readable codes which, when executed by a computer, cause the computer to execute the information processing method according to claim 11.

13. An information processing system comprising:
the information processing apparatus (5) according to claim 1; and
a communication terminal (3) configured to communicate with the information processing apparatus (5), wherein
the information processing apparatus (5) includes
transmitting means (51) for transmitting the display image to the communication terminal (3), and
the communication terminal (3) includes:
receiving means (31) for receiving the display image from the information processing apparatus (5); and
display control means (34) for controlling a display unit to display the display image.
